# EUROPEAN PATENT APPLICATION

(11) **EP 4 733 934 A1**
(43) Date of publication of application: **29.04.2026**
(21) Application number: 23946108.0
(22) Date of filing: 21.07.2023
(51) Int. Cl.: G06F 9/455

(54) **CONTROL METHOD, NETWORK CARD SYSTEM, HOST SYSTEM AND CHIP SYSTEM**

(71) Applicant: Huawei Technologies Co., Ltd., Shenzhen, Guangdong 518129 (CN)
(72) Inventor: LU, Shengwen, Shenzhen, Guangdong 518129 (CN)
(74) Representative: Pfenning, Meinig & Partner mbB
(86) International application number: PCT/CN2023/108758
(87) International publication number: WO 2025/020014

(57) **Abstract**

Embodiments of this application provide a control method, a network interface card system, a host system, and a chip system, applied to the field of computer virtualization technologies. A first virtual machine and a virtual machine management system run on the host system. The first virtual machine is directly connected to the network interface card system, and the first virtual machine performs stateful service interaction through the network interface card system. The host system applies for memory space of a first physical area address, to store service interaction status information of the first virtual machine, and the first physical area address has a non-writable attribute for the first virtual machine. The virtual machine management system sends first indication information to the network interface card system, to indicate an identifier of the first virtual machine and the first physical area address. In subsequent service interaction, the network interface card system obtains the service interaction status information from the first physical area address based on the first indication information, to assist the service interaction of the first virtual machine. Embodiments reduce difficulty of live migration while avoiding security and reliability problems of the first virtual machine.

## Description

### TECHNICAL FIELD

This application relates to the field of computer virtualization technologies, and in particular, to a control method, a network interface card system, a host system, and a chip system.

### BACKGROUND

In the current computer cloud computing field, virtualization technology is continuously developing. The virtualization technology is based on a chip system, and the chip system includes a host system and a network interface card system. A first virtual machine and a virtual machine management system run on the host system. The first virtual machine performs service interaction with another network node through a network interface card chip. In this process, the virtual machine management system manages the first virtual machine. For example, the virtual machine management system manages and intercepts processing instructions sent by the first virtual machine, and forwards a related transaction to the network interface card chip for a processing instruction that is confirmed to be secure. Managing a running instruction of the first virtual machine by the virtual machine management system can ensure security and reliability of the chip system when the first virtual machine is running, but may also limit performance of service interaction performed by the first virtual machine through the network interface card system.

A manner of improving the service interaction performance of the virtual machine is: directly connecting the network interface card system to the first virtual machine. In this case, the virtual machine management system does not need to intercept a service-related processing instruction sent by the first virtual machine. However, during virtualization passthrough, when the first virtual machine performs stateful service interaction, if service interaction status information of the first virtual machine is stored in a kernel mode of the host system, the first virtual machine after the passthrough may modify the related service interaction status information, causing security and reliability problems of the chip system. If service interaction status information of the first virtual machine is stored in memory space of the network interface card system, security and reliability problems of the chip system caused by the first virtual machine can be avoided, but difficulty of live migration of the first virtual machine is greatly increased.

### SUMMARY

Embodiments of this application provide a control method, a network interface card system, a host system, and a chip system. During virtualization passthrough, embodiments of this application reduce difficulty of live migration of the first virtual machine while avoiding security and reliability problems of a first virtual machine.

To achieve the foregoing objectives, the following technical solutions are used in embodiments of this application.

According to a first aspect, an embodiment of this application provides a control method based on a network interface card system. The control method includes: receiving first indication information, where the first indication information indicates an identifier of a first virtual machine and a first physical area address, the first virtual machine runs on a host system, the first physical area address is a storage address in physical pages in a host storage of the host system, the first physical area address has a non-writable attribute for the first virtual machine, and the first entry data includes service interaction status information of the first virtual machine; and storing the first indication information.

In this embodiment of this application, the first physical area address is applied for in the host storage by using the host system. The first entry data of the first virtual machine is stored by using the first physical area address. The host system and/or the network interface card system store/stores the first entry data in the first physical area address, to facilitate storage resource management on memory space occupied by the first virtual machine. When the first virtual machine is directly connected to the network interface card system, to avoid security and reliability problems caused by modifying the first entry data in the host storage by the first virtual machine, it needs to be ensured that the first physical area address has the non-writable attribute for the first virtual machine. In addition, because data processing is performed in physical pages in a running process of the host system and the network interface card system, the first physical area address also needs to be a storage area address in physical pages. Otherwise, when a specific memory area in the first physical area address occupies only a part of a memory area of a physical page, there is also a risk of modifying the first physical area address in a process of modifying the other part of the memory area of the physical page based on the instruction of the first virtual machine. In a working process of the network interface card system, the first indication information is obtained and stored. In a subsequent working process of the network interface card system, the related service interaction status information may be directly obtained from the first physical area address in the host system based on the first indication information. In this embodiment of this application, according to the foregoing implementation, when the network interface card system is directly connected to the first virtual machine, security and reliability problems caused by running of the first virtual machine can be avoided. On this basis, difficulty of live migration of the first virtual machine is further reduced. Finally, the first entry data is stored in the host system, which also facilitates management of a memory resource of the first virtual machine.

In some possible implementations, in the control method based on the network interface card system, after the first indication information is stored, the first indication information may assist the first virtual machine in packet exchange with another network node. In a packet exchange process, a packet sent by another network node carries indication information. The indication information may be control indication information, or may be data processing indication information. When the indication information is the data processing indication information, a data processing operation is performed on the host memory based on the data processing indication information. The data processing operation may be classified into a data write operation, a data read operation, and the like based on different data processing types.

In a possible implementation, the control method further includes: receiving a first packet, and discarding the first packet, where the first packet carries data processing indication information, the data processing indication information indicates a data processing type and a second physical area address, the data processing type corresponding to the first packet is a data write operation, and the second physical area address partially or completely belongs to the first physical area address. In this embodiment of this application, when the indication information carried in the first packet is the data processing indication information, and the corresponding data processing type is the data write operation, to ensure that the data write operation during interaction between the first virtual machine and another network node does not modify the first entry data in the first physical area address, in this control method, the received packet may be checked. Specifically, after the first packet is received, the data processing type is determined. If the data processing type is the data read operation, the first physical area address is not modified, and the packet may be normally executed. If the data processing type of the first packet is data write operation, whether the data write operation is writing into the first physical area address needs to be determined. If the data write operation is writing into a memory area outside the first physical area address, the first entry data is not modified, and the packet may be normally executed. If the data write operation is writing into a part of the first physical area address or the entire first physical area address, the write operation may be writing new data into a blank memory area in a first physical storage area, or may be modifying data in a first physical storage area. Both the two manners have a risk of modifying the first entry data. To ensure security and reliability, the first packet written into the first physical area address needs to be discarded.

In a possible implementation, the control method further includes: obtaining the service interaction status information from the first physical area address in the host storage based on the first packet and the first indication information, and obtaining the data processing indication information based on the service interaction status information. In this embodiment of this application, the first entry data is the service interaction status information about the service interaction between the first virtual machine and the another network node. When obtaining the first packet sent by the another network node, the network interface card system needs to parse the first packet based on the service interaction status information, to obtain the data processing indication information, the control indication information, and the like. In this process, the network interface card system needs to obtain, based on the first physical area address in the first indication information, the related service interaction status information from the corresponding first physical area address in the host storage.

In a possible implementation, the control method further includes: receiving a first instruction, where the first instruction instructs to perform a write operation on the first physical area address; and sending a second write instruction to the host storage based on the first instruction, where the second write instruction instructs the host storage to write data into the first physical area address, or modify the service interaction status information in the first physical area address. In this embodiment of this application, the host system may send the first instruction to the network interface card system, and indicate, to the network interface card system based on the first instruction, that the write operation needs to be performed on the first sequence area address. In the control method based on the network interface card system, after the first instruction is obtained, the second write instruction is generated based on the first instruction. The write operation is performed on the first physical area address in the host memory by using the second write instruction. The write operation may be writing data into the first physical area address, or modifying the service interaction status information in the first physical area address.

According to a second aspect, an embodiment of this application further provides a control method. A host system includes a host processor and a host storage. A first virtual machine and a virtual machine management system run on the host processor. The control method is based on the host processor. The control method includes: applying to the host storage for a first physical area address in physical pages, where the first physical area address is used to store first entry data, the first physical area address has a non-writable attribute for the first virtual machine, and the first entry data includes service interaction status information of the first virtual machine; and sending first indication information to a network interface card system through the virtual machine management system, where the first indication information indicates an identifier of the first virtual machine and the first physical area address.

In this embodiment of this application, in the host processor-based control method, the host processor applies to the host storage for the first physical area address, to store the service interaction status information of the first virtual machine, generates a first indication signal based on the first physical area address and the identifier of the first virtual machine, and sending the first indication signal to the network interface card system through the virtual machine management system. The first physical area address has the non-writable attribute for the first virtual machine. In a subsequent process in which the first virtual machine performs service interaction with another network node, the network interface card system may obtain the service interaction status information based on the first indication information, to assist the first virtual machine in performing service interaction.

In a possible implementation, applying to the host storage for the first physical area address in physical pages includes: applying to the host storage for the first physical area address in physical pages through the first virtual machine, and sending second indication information to the virtual machine management system, where the second indication information indicates the first physical area address. In this embodiment of this application, after running, the first virtual machine may directly apply to the host storage for the first physical area address after obtaining a required memory size of the first physical area address through calculation. Then, the first virtual machine indicates the first physical area address related to the virtual machine management system by using the second indication information, so that the virtual machine management system manages the first physical area address, generates the first indication information, and sends the first indication information to the network interface card system.

In a possible implementation, applying to the host storage for the first physical area address in physical pages includes: sending second indication information to the virtual machine management system through the first virtual machine, where the second indication information indicates the first physical area address; and applying, based on the second indication information, to the host storage for the first physical area address in physical pages through the virtual machine management system. In this embodiment of this application, after running, the first virtual machine may notify the virtual machine management system of the first physical area address in a form of the second indication information after calculating a required memory size of the first physical area address. Then, the virtual machine management system applies to the host storage for the first physical area address.

In some possible implementations, based on different manners of applying for the first physical area address, in this control method, memory resource management may be performed on the first physical area address in different manners.

In a possible implementation, the control method further includes: performing translation between a virtual address and a physical address based on a first memory mapping table; configuring, through the virtual machine management system, a first page table entry in a location that is in the first memory mapping table and that corresponds to the first virtual machine, where the first page table entry indicates a mapping relationship between the first physical area address and the virtual address; and setting an attribute of the first page table entry to the non-writable attribute for the first virtual machine. In this embodiment of this application, in the control method, a first memory manager of the host processor may implement, based on the first memory mapping table, translation from a virtual address at which the host processor can run to a physical address in the host storage. When the first physical area address is applied for through the first virtual machine or the virtual machine management system, the first page table entry corresponding to the first physical area address may be registered under a memory resource of the first virtual machine. In this case, the first physical area address is actually a memory resource occupied by the service interaction of the first virtual machine. In this manner, management of a memory resource actually used by a user of the first virtual machine is facilitated.

In a possible implementation, the control method further includes: performing translation between a virtual address and a physical address based on a first memory mapping table; and configuring, through the virtual machine management system, a first page table entry in a location that is in the first memory mapping table and that corresponds to the virtual machine management system, where the first page table entry indicates a mapping relationship between the first physical area address and the virtual address. In this embodiment of this application, when the first physical area address is applied for through the virtual machine management system (for example, the first physical area address is applied for through a PF driver of the virtual machine management system), the first page table entry corresponding to the first physical area address is registered under a memory resource of the virtual machine management system.

For example, the control method further includes: changing a second page table entry to a third page table entry through the virtual machine management system, where the second page table entry is a page table entry that is in the first memory mapping table and that corresponds to the first virtual machine, and the third page table entry is a page table entry that is in the first memory mapping table and that corresponds to the virtual machine management system. In this embodiment of this application, when the first physical area address is registered under the memory resource of the virtual machine management system, a memory resource for running of the virtual machine management system is occupied. However, the memory resource is actually used for running of the first virtual machine. To facilitate statistics and management of the memory resources, a part of a memory resource of the first virtual machine (that is, the second page table entry) may be changed to a memory resource of the virtual machine management system (that is, the third page table entry). This manner facilitates the management of the memory resource actually used by the user of the first virtual machine.

In a possible implementation, in an actual working process, according to the host system-based control method, a write operation may need to be performed on the first physical area address, to write new data, or modify data.

For example, the control method further includes: sending a third write instruction to the host storage through the virtual machine management system, where the third write instruction instructs the host storage to write data into the first physical area address, or modify the service interaction status information in the first physical area address. In this embodiment of this application, the first virtual machine has no write attribute permission on the first physical area address. When the host system needs to modify the first physical area address in the host storage, the host system may perform a related write operation by using the virtual machine management system running in a kernel mode.

For example, the control method further includes: sending a first instruction to the network interface card system through the first virtual machine and/or the virtual machine management system, where the first instruction instructs to perform a write operation on the first physical area address. In this embodiment of this application, when the first physical area address needs to be modified, in this control method, the first instruction may be sent to the network interface card system through the host processor. The first instruction instructs the network interface card system to modify the first physical area address. After obtaining the first instruction, the network interface card system modifies the first physical area address.

According to a third aspect, an embodiment of this application further provides a network interface card system. The network interface card system includes a network interface card processor and an interface. The network interface card processor is configured to input a first indication signal through an interface, where the first indication information indicates an identifier of a first virtual machine and a first physical area address, the first virtual machine runs on a host system, the first physical area address is a storage address in physical pages in a host storage of the host system, the first physical area address is used to store first entry data, the first physical area address has a non-writable attribute for the first virtual machine, and the first entry data includes service interaction status information of the first virtual machine; and storing the first indication information. In a possible implementation, the network interface card system is further configured to: receive the first packet, and discard the first packet. The first packet carries data processing indication information. The data processing indication information indicates a data processing type and a second physical area address. The data processing type corresponding to the first packet is a data write operation, and the second physical area address partially or completely belongs to the first physical area address.

In a possible implementation, the network interface card system is further configured to: obtain the service interaction status information from the first physical area address in the host storage based on the first packet and the first indication information; and obtain the data processing indication information based on the service interaction status information.

In some possible implementations, in actual service interaction, based on an interaction result of the first packet, the host system may update the service interaction status information and the like stored in the first physical area address. In this case, the host system may perform related update processing by using the network interface card system.

For example, the network interface card system is further configured to: receive a first instruction, where the first instruction instructs to perform a write operation on the first physical area address; and send a second write instruction to the host storage based on the first instruction, where the second write instruction instructs the host storage to write data into the first physical area address, or modify the service interaction status information in the first physical area address.

For example, the network interface card system may be a network interface card chip, may be a data processor (Data Processing Unit, DPU) having a network offloading function and a data processing offloading function, may be a system on chip (SoC) having a network interface card function, or may be a very large scale integration circuit (very large scale integration circuit, VLSI) having a network interface card function.

For example, a fourth host system D1 and a fourth network interface card system D2 may be installed on a same circuit board, or may be separately installed on different circuit boards. For example, the fourth host system D1 may be installed on a circuit board, and the fourth network interface card system D2 is pluggably installed on the circuit board of the fourth host system D1 in a hot swap manner.

According to a fourth aspect, an embodiment of this application further provides a host system. The host system includes a host processor and a host storage. A first virtual machine and a virtual machine management system run on the host processor. The host processor is configured to: apply to the host storage for a first physical area address in physical pages, where the first physical area address is used to store first entry data, the first physical area address has a non-writable attribute for the first virtual machine, and the first entry data includes service interaction status information of the first virtual machine; and send first indication information to a network interface card system through the virtual machine management system, where the first indication information indicates an identifier of the first virtual machine and the first physical area address.

In some possible implementations, the host processor may apply to the host storage for the first physical area address through the first virtual machine. For example, the host processor is further configured to: apply to the host storage for the first physical area address in physical pages through the first virtual machine, and send second indication information to the virtual machine management system, where the second indication information indicates the first physical area address.

In a possible implementation, the host processor may apply to the host storage for the first physical area address through the virtual machine management system. For example, the host processor is further configured to: send second indication information to the virtual machine management system through the first virtual machine; and apply, based on the second indication information, to the host storage for the first physical area address in physical pages through the virtual machine management system.

In some possible implementations, based on different manners of applying for the first physical area address, memory resource management may be performed on the first physical area address in different manners.

In a possible example, the host processor further includes a first memory manager. The host processor is further configured to: perform translation between a virtual address and a physical address based on a first memory mapping table through the first memory manager; configure, through the virtual machine management system, a first page table entry in a location that is in the first memory mapping table and that corresponds to the first virtual machine, where the first page table entry indicates a mapping relationship between the first physical area address and the virtual address; and set an attribute of the first page table entry to the non-writable attribute for the first virtual machine.

In a possible example, the host processor further includes a first memory manager. The host processor is further configured to: perform translation between a virtual address and a physical address based on a first memory mapping table through the first memory manager; and configure, through the virtual machine management system, a first page table entry in a location that is in the first memory mapping table and that corresponds to the virtual machine management system, where the first page table entry indicates a mapping relationship between the first physical area address and the virtual address.

For example, the host processor is further configured to change a second page table entry to a third page table entry through the virtual machine management system, where the second page table entry is a page table entry that is in the first memory mapping table and that corresponds to the first virtual machine, and the third page table entry is a page table entry that is in the first memory mapping table and that corresponds to the virtual machine management system.

In some possible implementations, the host system further includes a second memory manager. The second memory manager is configured to perform translation between a virtual address and a physical address based on a second memory mapping table. In this embodiment of this application, the network interface card system may access the host storage through the second memory manager in the host system. In this case, the virtual machine management system further needs to write the first page table entry into the second memory mapping table. After the first page table entry is stored in the second memory mapping table, when the network interface card system accesses the first physical area address based on the first indication information, and the first indication information includes the virtual address (for example, a guest physical address of the first virtual machine, that is, a GPA), the second memory manager may implement mapping translation between the first physical area address and the virtual address, to ensure normal execution of the access. For example, the virtual machine management system may set the first page table entry in the second memory mapping file to the non-writable attribute for the first virtual machine, to prevent the first virtual machine from modifying the first page table entry in the second memory mapping file, or prevent the first virtual machine from implementing a write operation on the first physical area address by using the second memory mapping file.

In a possible implementation, in an actual working process, the host system may need to perform a write operation on the first physical area address, to write new data, or modify data.

In some possible examples, the host processor may perform the write operation on the first physical area address through the virtual machine management system. For example, the host processor is further configured to send a third write instruction to the host storage through the virtual machine management system, where the third write instruction instructs the host storage to write data into the first physical area address, or modify the service interaction status information in the first physical area address.

In some possible examples, the host processor may perform the write operation on the first physical area address through the network interface card system. For example, the host processor is further configured to send a first instruction to the network interface card system through the first virtual machine and/or the virtual machine management system, where the first instruction instructs to perform the write operation on the first physical area address.

According to a fifth aspect, an embodiment of this application further provides a chip system. The chip system includes the network interface card system described in the third aspect and the host system described in the fourth aspect. For example, the host system and the network interface card system may be installed on a same circuit board, or may be separately installed on different circuit boards. For example, the host system may be installed on a circuit board, and the network interface card system is pluggably installed on the circuit board of the host system in a hot swap manner.

According to a sixth aspect, an embodiment of this application further provides an electronic device. The electronic device includes a chassis and the chip system described in the fifth aspect. For example, a circuit board is disposed in the chassis. In some examples, both a host system and a network interface card system are installed on a same circuit board in a chassis. In some examples, both a host system and a network interface card system are installed on different circuit boards in a chassis. In some examples, both a host system and a network interface card system are installed in a chassis, and the network interface card system is pluggably installed on a circuit board of the host system in a hot swap manner. In some examples, a host system is installed in a chassis. A network interface card system is pluggably installed on a hot swap interface outside a chassis of an electronic device in a hot swap manner, and is coupled to the host system through the hot swap interface of the electronic device.

According to a seventh aspect, an embodiment of this application further provides a computer-readable storage medium. The computer-readable storage medium includes instructions. When the instructions are run on a processor, the processor is caused to perform the control method described in the first aspect and/or the control method described in the second aspect.

According to an eighth aspect, an embodiment of this application further provides a computer program product. When the computer program product runs on a computer, the computer is caused to perform the control method described in the first aspect and/or the control method described in the second aspect.

For technical principles and beneficial effects of the third aspect, the fourth aspect, the fifth aspect, the sixth aspect, the seventh aspect, and the eighth aspect, refer to related descriptions of the first aspect and the second aspect. Details are not described herein again.

### BRIEF DESCRIPTION OF DRAWINGS

FIG. 1 is a diagram of a structure of a chip system based on a conventional data read manner;
FIG. 2 is a diagram of a structure of a DMA-based chip system;
FIG. 3 is a diagram of service interaction between a first chip system and a second chip system based on DMA;
FIG. 4 is a diagram of service interaction between a first chip system and a second chip system based on RDMA;
FIG. 5 is a diagram of a system network architecture in non-virtualization;
FIG. 6 is a diagram of a system network architecture in virtualization;
FIG. 7 is a diagram of a mapping relationship between a virtual address and a physical address in virtualization;
FIG. 8 is a diagram of an architecture in which a network interface card system is directly connected to a virtual machine in virtualization;
FIG. 9 is a diagram of a structure of a third chip system according to an embodiment of this application;
FIG. 10 is a diagram of a structure of a fourth chip system according to an embodiment of this application;
FIG. 11 is a diagram of a structure of another fourth chip system according to an embodiment of this application;
FIG. 12 is a schematic flowchart 1 of a control method according to an embodiment of this application;
FIG. 13 is a schematic flowchart 2 of another control method according to an embodiment of this application;
FIG. 14 is a schematic flowchart 3 of still another control method according to an embodiment of this application;
FIG. 15 is a schematic flowchart 4 of still another control method according to an embodiment of this application;
FIG. 16 is a schematic flowchart 5 of still another control method according to an embodiment of this application;
FIG. 17 is a schematic flowchart 6 of still another control method according to an embodiment of this application;
FIG. 18 is a schematic flowchart 7 of still another control method according to an embodiment of this application;
FIG. 19 is a schematic flowchart 8 of still another control method according to an embodiment of this application;
FIG. 20 is a schematic flowchart 9 of still another control method according to an embodiment of this application; and
FIG. 21 is a schematic flowchart 10 of still another control method according to an embodiment of this application.

### DESCRIPTION OF EMBODIMENTS

It should be noted that the terms such as "first" and "second" in embodiments of this application are merely used to distinguish between features of a same type, and cannot be understood as an indication of relative importance, a quantity, a sequence, or the like. The term "example", "for example", or the like in embodiments of this application is used to give an example, an illustration, or a description. Any embodiment or design scheme described as an "example" or "for example" in this application should not be explained as being more preferred or having more advantages than another embodiment or design scheme. To be precise, use of the word like "example" or "for example" is intended to present a relative concept in a specific manner. The terms "coupling" and "connection" in embodiments of this application should be understood in a broad sense. For example, the term may refer to a physical direct connection, or may refer to an indirect connection implemented through an electronic component, for example, a connection implemented through a resistor, an inductor, a capacitor, or another electronic component. The term "bus" in embodiments of this application may be understood as one bus or a plurality of buses. In addition, the bus may be a data bus, a control bus, or the like.

First, some basic concepts in embodiments of this application are described.

A processing chip may be based on different chip architectures, for example, an advanced reduced instruction set processor (advanced RISC machines, ARM) architecture or an x86 architecture (x86 architecture). To ensure that the processing chip runs in a standard, effective, and fast manner, the chip architectures are all set with an instruction set (instruction set architecture, ISA). The instruction set is a standard language required for running of the processing chip, and includes a plurality of preset instructions. The instructions may be roughly classified into an arithmetical instruction, a data movement instruction, a control instruction, and the like. An application (application, APP) runs on the processing chip. Running operations of the APP on the processing chip are compiled and interpreted as instructions, and are finally executed by the processing chip in a form of the instructions. Some instructions in the instruction set have little impact on an operating system of the processing chip when the instructions fail to be run or the like, while some instructions may cause major problems such as a crash or restart of the operating system of the processing chip when the instructions fail to be run or the like. Therefore, different permission levels need to be set for different instructions based on importance of the instructions. Instructions with lower permission levels are open to APPs for running, to ensure running stability of the processing system. For example, in the x86 architecture, instruction permission may be classified into four levels in descending order: a Ring0 level, a Ring1 level, a Ring2 level, and a Ring3 level. Usually, instructions at the Ring0 level have the highest permission, are also referred to as privileged instructions, and are open to a kernel (kernel) mode. Instructions at the Ring1 and Ring2 levels have higher permission and are open to a driver of the processing chip. Instructions at the Ring3 level have the lowest permission, are also referred to as non-privileged instructions, and are open to a user (user) mode. The kernel mode and user mode are different running states of the processing chip. The APP runs in the user mode of the processing chip. In some operating systems (for example, a Linux system), there are only instructions at the Ring0 level and the Ring3 level. The instructions at the Ring0 level correspond to running of the kernel mode and the driver, and the instructions at the Ring3 level correspond to running of the user mode. During actual application, when an APP working in the user mode needs to run a service with higher permission, a request needs to be initiated to the kernel mode in the user mode through system invoking. After the system invoking is initiated, the processing chip switches to the kernel mode to execute the corresponding service with higher permission.

A storage may be classified into a main storage and a secondary storage. The main storage directly exchanges information with the processing chip. A memory management unit (memory management unit, MMU) program is disposed in the processing chip. An MMU performs mapping management of virtual addresses and physical addresses based on an address mapping page table, and divides the physical addresses in a form of physical pages. Each physical page is mapped to a corresponding virtual address page table. When the processing chip works, the MMU provides, in virtual address page tables, a logical address (that is, a virtual address) for program running for the processing chip. A process in which the processing chip accesses the main storage is based on the virtual address. After the virtual address is translated into a physical address corresponding to the main storage by using the memory management unit (memory management unit, MMU) program, the processing chip accesses the main storage.

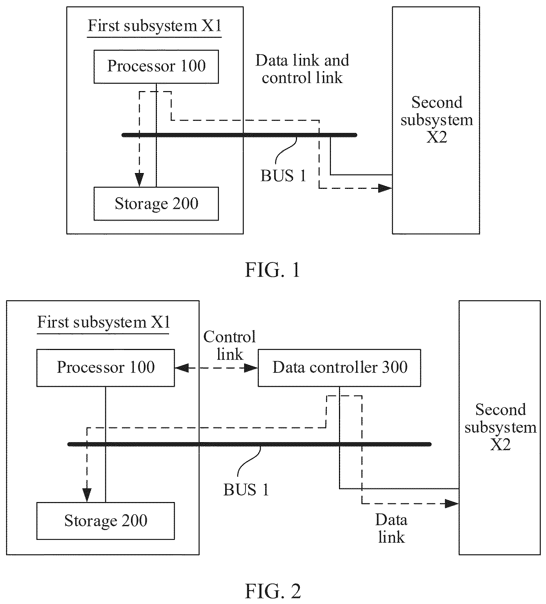

As shown in FIG. 1, a chip system includes a first subsystem X1 and a second subsystem X2. The first subsystem X1 includes a processor 100 and a storage 200. The processor 100 and the second subsystem X2 are separately coupled to the storage 200 through a first bus BUS 1. The storage 200 is a memory component of the processor 100. When the second subsystem X2 performs a data write operation or a data read operation on the storage 200 of the first subsystem X1, a data link and a control link are shown by dashed lines in the figure. It can be learned that both the data write operation and the data read operation need the processor 100. That the second subsystem X2 performs the data read operation on the storage 200 is used as an example. The second subsystem X2 sends a data read instruction to the processor 100 through the first bus BUS 1. The processor 100 reads related data from the storage 200 based on the data read instruction, and caches the related data in a cache of the processor 100. Then, the second subsystem X2 reads the related data from the cache of the processor 100, to complete data reading. Similarly, when the second subsystem X2 needs to perform the data write operation on the storage 200, the processor 100 also needs to be used as a transit point, to write data into the storage 200. In this manner, the processor 100, serving as the data transit point between the storage 200 and the second subsystem X2, needs to perform data movement, that is, write the data that needs to be written by the second subsystem X2 from the cache to the storage 200, to assist in completing data write operation performed by the second subsystem X2 on the storage 200; or cache data in the storage 200 to the cache, to assist in completing data read processing performed by the second subsystem X2 on the storage 200. This data movement operation occupies partial performance of the processor 100, and a proportion of the occupied performance varies with frequency of data movement, a size of moved data, and the like. However, in an actual scenario, the processor 100 is mainly used as a component for data processing and logical operation of the first subsystem X1. Excessive data movement operations reduce performance of the first subsystem X1, and further reduce performance of the chip system. Therefore, a direct memory access (direct memory access, DMA) technology is proposed in the industry.

DMA means that in a process in which the second subsystem X2 performs reading/writing on a memory of the first subsystem X1, a data movement operation may not be performed by using the processor 100 in the first subsystem X1, but a data controller is additionally disposed to assist in performing the data movement operation. As shown in FIG. 2, a data controller 300 is coupled to a component like a storage 200 through a first bus BUS 1. In an application scenario based on the DMA technology, a second subsystem X2 establishes a data link with the storage 200 through the data controller 300, and establishes a control link with the processor 100 through the data controller 300. When the second subsystem X2 needs to perform a data write operation on the storage 200, the second subsystem X2 writes data into the storage 200 through the data controller 300 over the data link. In addition, the data controller 300 and the processor 100 exchange, over the control link, information such as a control command related to a data write operation process. In some examples, the data controller 300 may be disposed in the first subsystem X1, or may be disposed in the second subsystem X2. That the data controller 300 is disposed in the second subsystem X2 is used as an example. The first subsystem X1 may be a host system that performs data processing, logical operation, and the like in a chip system. The second subsystem X2 may be a network interface card system integrating a DMA function and a network interface card function. A service related to data movement of the processor 100 in the host system is transferred to the network interface card system for execution. This implementation is also referred to as data processing offloading. The offloading herein refers to transferring a function, a transaction, and/or the like that need/needs to be executed by a component to another component for execution, to improve performance of the component and the like. The network interface card system may also be referred to as an offload network interface card.

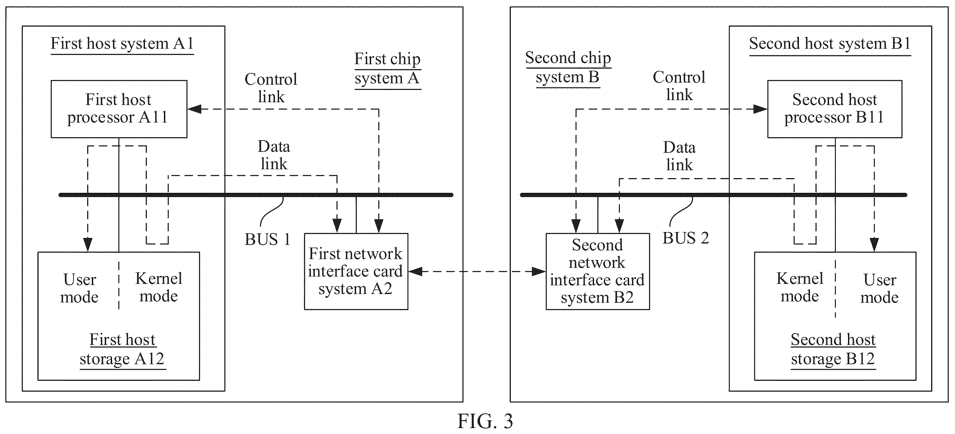

A chip system based on a network interface card system may be used as a network node. A plurality of network nodes may perform packet message exchange. As shown in FIG. 3, a first chip system A includes a first host system A1 and a first network interface card system A2. The first host system A1 includes a first host processor A11 and a first host storage A12. A second chip system B includes a second host system B1 and a second network interface card system B2. The second host system B1 includes a second host processor B11 and a second host storage B12. Interaction inside the first chip system A is implemented through a first bus BUS 1. Interaction inside the second chip system B is implemented through a second bus BUS 2. The first chip system A and the second chip system B may be used as two communication nodes to perform packet message exchange by using the first network interface card system A2 and the second network interface card system B2.

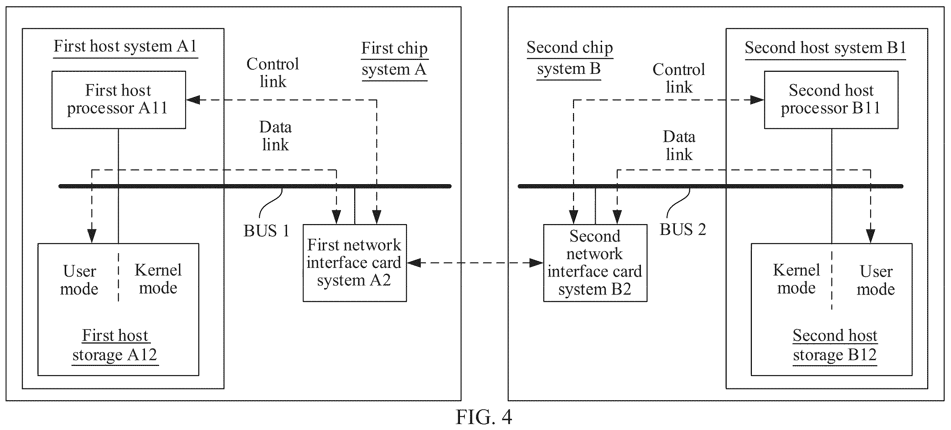

When a first node corresponding to the first chip system A and a second node corresponding to the second chip system B in FIG. 3 perform service interaction in a conventional packet exchange manner, the interaction between the two nodes still depends heavily on a processor of a host system to encapsulate and parse a packet message based on a DMA technology. Therefore, a TCP offload engine (TOE), remote direct address access (RDMA), a unified bus (unified bus, UB) protocol, and the like are proposed in the industry. The TOE offloads a transport layer protocol, a network layer protocol, and the like from a processor network of the host system to the network interface card system, presents packet encapsulation and parsing on the network interface card system, and encapsulates and parses a packet message based on the network interface card system, to improve working efficiency of the host processor of the host system. The RDMA also offloads packet encapsulation and parsing from the processor network of the host system to the network interface card system. A kernel bypass (kernel bypass) mechanism of the RDMA enables memory data to be directly read and written between an APP and the network interface card system over the data link. A zero copy (zero copy) memory mechanism of the RDMA may enable memory data to be directly read between two network nodes, and the like, to reduce running load of a processor and improve processing efficiency. However, on a control link, a small quantity of control signals still need to be processed by a kernel mode of the processor of the host system. In the RDMA, the APP may access a memory of a remote network node, and the remote network node can be read without participation of a process or a processor on the remote network node. Common RDMA technologies include the Ethernet-based RDMA (RDMA over converged Ethernet, RoCE) protocol. Functions implemented by using the UB and the RDMA are similar. That the first node corresponding to the first chip system A sends, based on the RDMA technology, a packet message to the second node corresponding to the second chip system B is used as an example. As shown in FIG. 4, the first network interface card system A2 reads a data processing operation based on DMA, and reads data that needs to be transmitted from user-mode storage space of the first host storage A12. The first network interface card system A2 performs packet encapsulation on the data that needs to be transmitted, to obtain a packet message, and sends the packet message to the second network interface card system B2 of the second chip system B. The second network interface card system B2 parses the received packet message, to obtain the data that needs to be transmitted. The second network interface card system B2 writes a data processing operation based on the DMA, and writes the data that needs to be transmitted into user-mode memory space of the second host storage B12.

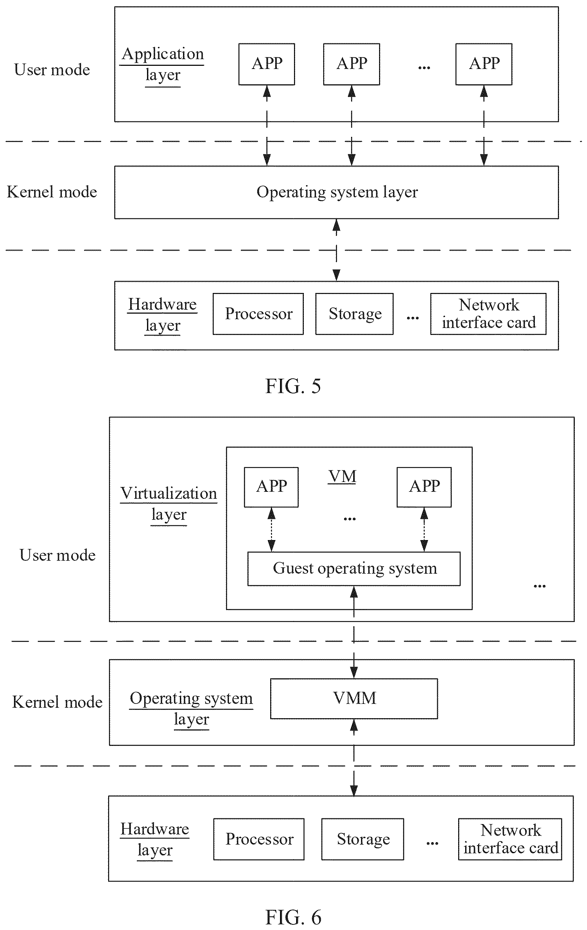

Virtualization is a basis of a cloud computing technology. In the cloud computing technology, after physical hardware resources (including computing resources, storage resources, and network resources) of an electronic device (for example, a server device) are virtualized by using a virtualization technology, a plurality of virtual machines (virtual machines, VMs) that run independently and do not interfere with each other are obtained. The VM is an independent virtual processing device constructed by using the computing resources, the storage resources, and the network resources of the electronic device. As shown in FIG. 5, before virtualization is performed on the electronic device, a computer system architecture of the electronic device may be divided into an application layer, an operating system (operating system, OS) layer, and a hardware layer from top to bottom. The operating system layer is also referred to as a host OS layer. The hardware layer provides a computing resource, a storage resource, a network resource, and the like for an upper-layer architecture based on an electronic component (for example, a host system that includes a processor and a storage or a network interface card system) of the electronic device. The operating system layer may run in a kernel mode of the electronic device. The application layer may run in a user mode of the electronic device. After virtualization is performed on the electronic device, as shown in FIG. 6, a resource management layer and a virtualization layer are obtained through virtualization above the hardware layer. There is at least one VM at the virtualization layer. A virtual machine manager (virtual machine manager, VMM) is disposed in the resource management layer to manage each VM. In some scenarios, the VMM may also be referred to as a hypervisor. The hypervisor varies with an operating system type. As shown in FIG. 6, each VM includes a guest operating system (guest OS) and an APP.

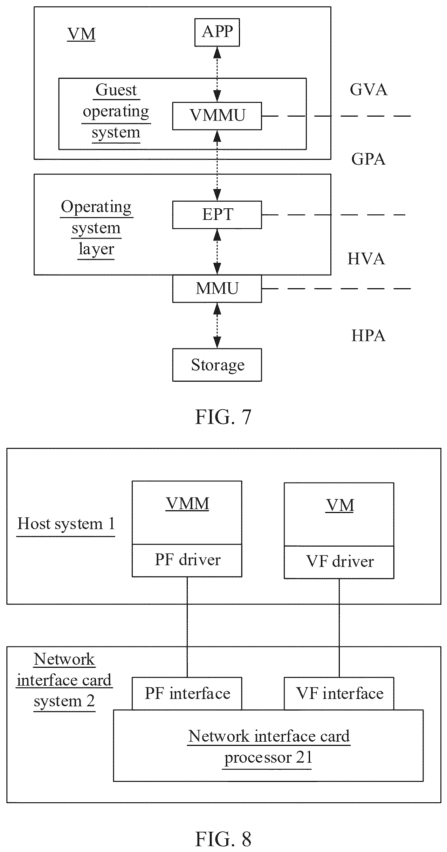

Memory virtualization is to obtain a guest virtual address (guest virtual address, GVA) and a guest physical address (guest physical address, GPA) that correspond to each VM through virtualization. Each VM runs based on independent virtual computer logic. The GVA is an address of a corresponding processing chip in a virtual address concept when the VM works. The GPA is an address of a corresponding storage in a physical address concept when the VM works. In addition, concepts of an actual virtual address (host virtual address, HVA) and an actual physical address (host physical address, HPA) are introduced in the memory virtualization. The HVA is a virtual address at which the corresponding processing chip actually runs. The HPA is a physical address at which the corresponding storage actually runs. As shown in FIG. 7, when a VM works, an APP in the VM sends an instruction to a virtual memory management unit (virtual memory management unit, VMMU) program in the VM based on a GVA. The VMMU translates the GVA to a GPA. Then, a host OS in which a VMM is located translates the GPA into an HVA based on a virtual extended mapping page table (extended page table, EPT). Then, the HVA is mapped to an HPA in a storage based on an MMU at a hardware layer. Because each VM runs by using an independent processing system, the following problem may occur in a process of delivering some instructions by an APP in the VM: A guest OS of the VM delivers an instruction at a Ring0 level. A running program of the guest OS considers that delivering the privileged instruction at the Ring0 level is normal. However, in actual work, the VM has only permission to deliver an instruction at a Ring3 level. To avoid an impact on another VM caused by the privileged instruction delivered by the VM, as shown in FIG. 6, an instruction sent by the VM needs to be intercepted, managed, and the like by using the VMM.

Virtualization passthrough indicates that the VM can be directly connected to a network interface card system. In one manner, an actual network interface card system is allocated to the VM in a physical architecture. Another manner is single root I/O interface virtualization (single root I/O virtualization, SR-IOV). SR-IOV is a standard in which a PCIe interface function is shared with the virtual machine. SR-IOV provides independent memory space, an interrupt, and a DMA flow for the VM, to bypass the VMM for data access. The SR-IOV protocol introduces two types of function concepts: a physical function (physical function, PF) and a virtual function (virtual function, VF). The PF includes complete PCIe functions, including an SR-IOV expansion capability. The PF function can be used for SR-IOV configuration and management. The VF includes lightweight PCIe functions. Each VF has its own exclusive PCI configuration area and may share a same physical resource with another VF. The PF driver varies with the hypervisor. Generally, the PF driver can be operated only with permission higher than that of a common VM. The PF driver includes all functions of a conventional data interface driver, so that the hypervisor can access I/O resources of the electronic device. A related operation may be performed by invoking the PF driver, to affect the entire electronic device. As shown in FIG. 8, a network interface card system 2 includes a network interface card processor 21 and a plurality of interfaces. The plurality of interfaces include interfaces that can provide a plurality of PCIe functions for a host system 1 side by using the SR-IOV technology by the network interface card processor 21. A PCIe interface that is in the network interface card system 2 and that performs passthrough interaction with a PF driver of the host system 1 is a PF interface. A PCIe interface that is in the network interface card system 2 and that correspondingly directly connected to a VM in the host system 1 is a VF interface. The SR-IOV technology may be considered as virtualization of the network interface card system 2, and passthrough between the VM and the network interface card system 2 may maximize related data communication and processing performance of the VM. However, in passthrough between the VM and the network interface card processor 21, an instruction sent by the VM through the VF interface is not intercepted and managed by a VMM, and there may be a problem that security and reliability of a VF interface of another VM are affected.

Stateless service interaction means that when two network nodes exchange packet messages, the network nodes process the packet messages without depending on specific status information, and can independently process the packet messages without being affected. Stateful service interaction means that when two network nodes exchange packet messages, processing of different packet messages is dependent on each other. The processing of these packet messages depends on a specific working status. In actual processing, the packet message needs to be processed based on related status information. In addition, in a process of processing the packet message, content of the status information may change accordingly. In a process in which a VM of a network node performs service interaction with another network node Q1 through a network interface card system, the status information may be an address mapping relationship (for example, a mapping relationship between an address like a GVA, a GPA, or an HVA, and an HPA), related network protocol control information, network status control information, and the like. Generally, the status information may be stored in a form of a mapping status table. In stateful interaction, when virtualization is not performed, because memory space of a network interface card system is limited, service interaction status information may be generally stored in kernel-mode memory space of a storage of a host system, to ensure that an APP cannot modify the related status information, thereby ensuring reliability and security of the stateful service interaction. However, in a public cloud scenario, if virtualization is not performed on the network interface card system (that is, the VM is not directly connected to the network interface card system), related status information may still be stored in the kernel-mode memory space of the storage. A VM user does not modify the status information. However, if virtualization is accelerated based on the network interface card system, in other words, after the network interface card system is directly connected to the VM, many problems exist. For example, the VM user may initiate a network attack by using a corresponding VF driver and VF interface. In addition, after virtualization passthrough is implemented, the VM user can modify any information in the kernel-mode memory space. In this case, when the VM user modifies information, it is possible that the user maliciously modifies the information and modified information may affect another VM. Therefore, in the stateful interaction, after the network interface card system is directly connected to the VM, how to store the related service interaction status information of the VM and ensure that stateful service interaction of the VM does not cause a security problem to the chip system is a difficult problem.

Virtual machine migration: A virtual machine migration technology is to move a VM running on a source electronic device to a destination electronic device, so that the moved VM can run normally on the destination electronic device. A complete computer system includes a processor, a memory, a disk, a network interface card, and the like. The disk and the network interface card are I/O devices. According to the virtual machine migration technology, processor status information, memory data information, and I/O device status information in a VM can be migrated from a physical electronic device to another physical electronic device. The virtual machine migration technology is widely used in server cluster management of a cloud computing data center, and can implement load balancing, disaster recovery, and online upgrade of a server cluster. Virtual machine migration can reduce an operating expense of the cloud data center and improve management efficiency of the server cluster. The virtual machine migration is classified into static migration and dynamic migration. Static migration, also referred to as cold migration, means that after the VM is shut down on the source electronic device, the processor status information, the memory data information, the I/O device status information, and the like of the VM on the source electronic device are copied to the destination electronic device. Then, the VM is started on the destination electronic device. Cold migration usually interrupts VM services for several minutes or even longer. Dynamic migration, also referred to as live migration, means that the VM is shut down for only a short period of time (for example, several milliseconds) for migration of some data of the VM, and other data are dynamically copied when the VM is running normally. The memory data information of the VM occupies a large part of the data information of the live migration. In a live migration process, the memory data information is usually copied and migrated in a dynamic copy phase. In a short period of time in a shutdown phase, the processor status information and the I/O device status information are copied and migrated. The live migration process does not interrupt services running on the virtual machine. Compared with the cold migration, the live migration can improve service availability.

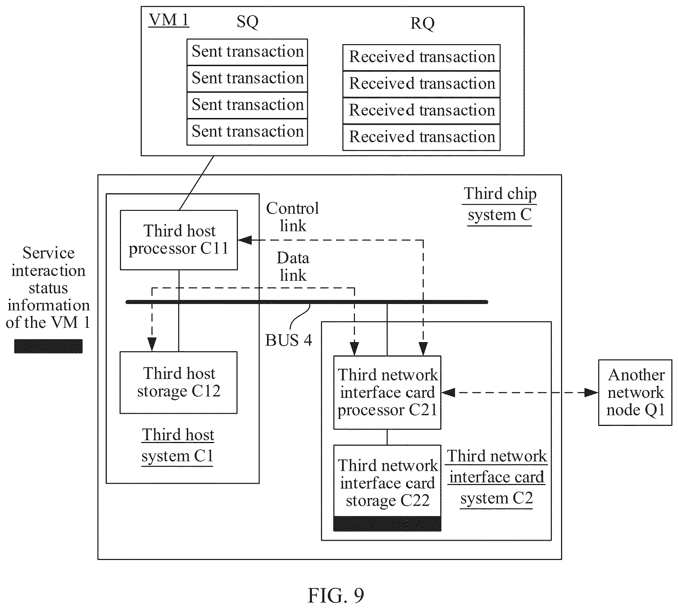

To resolve data security and system reliability problems brought by the VM during virtualization passthrough, an embodiment of this application further provides a first electronic device. The first electronic device includes a third chip system. As shown in FIG. 9, the third chip system C includes a third host system C1 and a third network interface card system C2. The third host system C1 includes a third host processor C11 and a third host storage C12. Interactive communication inside the third chip system C is performed through a third bus BUS 3. A first virtual machine VM 1 runs in the third host processor C11. The third host storage C12 stores running-related memory data of the first virtual machine VM 1, and the like. The third network interface card system C2 includes a third network interface card processor C21 and a third network interface card storage C22. The third network interface card storage C22 stores first entry data. The first entry data includes corresponding service interaction status information when the first virtual machine VM 1 performs service interaction. The service interaction status information may include entry data related to status control information, entry data related to a storage address of the status control information, and the like.

For example, a send queue (send queue, SQ) and a receive queue (receive queue, RQ) are configured in the first virtual machine VM 1. When the first virtual machine VM 1 needs to send a transaction to another network node Q1, the SQ is used to store related information when the first virtual machine VM 1 sends the transaction to the another network node Q1, and the RQ is used to store related information when the first virtual machine VM 1 receives a transaction from the another network node Q1. When the first virtual machine VM 1 needs to receive a related packet message from the another network node Q1, related received transaction information that needs to be placed in the RQ is placed in the RQ, and all other related service interaction status information is placed in the third network interface card storage C22 of the network interface card system C2. The third network interface card processor C21 obtains the related received transaction information from the RQ of the first virtual machine VM 1. After the corresponding packet message is received, service interaction status information is obtained from the third network interface card storage C22, and packet parsing is performed on the received packet message based on the service interaction status information, to obtain indication information sent by the another network node Q1. The indication information may be control indication information of a control link, or may be data processing indication information of a data link. Based on the service interaction status information and the indication information, the third network interface card processor C21 may exchange control information with the first virtual machine VM 1 over the control link, exchange data information with the first virtual machine VM lover the data link, and/or the like. Similarly, when the first virtual machine VM 1 needs to send a related packet message to the another network node Q1, related sent transaction information that needs to be placed in the SQ is placed in the SQ, and all other related service interaction status information is placed in the third network interface card storage C22 of the network interface card system C2. The third network interface card processor C21 obtains the related received transaction information from the SQ of the first virtual machine VM 1, performs related packet encapsulation, and the like, and then sends the encapsulated packet message to the another network node Q1.

In this embodiment of this application shown in FIG. 9, in a process of performing service interaction between the first virtual machine VM 1 and the another network node Q1, the third network interface card processor C21 of the third network interface card system C2 only needs to pay attention to security of transactions in the SQ and the RQ. Because the service interaction status information is stored in the third network interface card storage C22 mounted on the third network interface card processor C21, in a service interaction process, a related operation of the first virtual machine VM 1 does not modify the service interaction status information, and the third network interface card processor C21 does not need to check and pay attention to validity of the service interaction status information. According to the embodiment shown in FIG. 9, a security problem caused by a running operation of the first virtual machine VM 1 can be resolved during virtualization passthrough. However, in this implementation, the following problems exist.

Problem 1: Feasibility of live migration is reduced. For example, live migration of the first virtual machine VM 1 is very troublesome. A dedicated program needs to be additionally set to control the third network interface card processor C21 to read the service interaction status information of the first virtual machine VM 1 from the third network interface card storage C22. When a large quantity of service interaction connections are created between the first virtual machine VM 1 and the another network node Q1, service interaction status information that needs to be synchronized in a live migration process also increases. Excessive service interaction status information increases shutdown time of the first virtual machine VM 1, causes service experience deterioration, and even results in a live migration failure. For example, when service interaction status information of a plurality of VMs running in the third host system C1 is all stored in the third network interface card storage C22 of the third network interface card system C2, how to identify a correspondence between the stored service interaction status information and the VM is also a difficult problem. In addition, after the live migration, how to identify a correspondence between the service interaction status information and the VM on a destination electronic device is also a difficult problem.

Problem 2: In public cloud services, storage resources are very important assets. VMs provide computing resources and storage resources for users. The service interaction status information is related data about service interaction between the first virtual machine VM 1 and the another network node Q1, and the data is actually used by the VM users. However, the data occupies storage resources of the third network interface card system C2. In this case, memory resource management in public cloud operation is disordered.

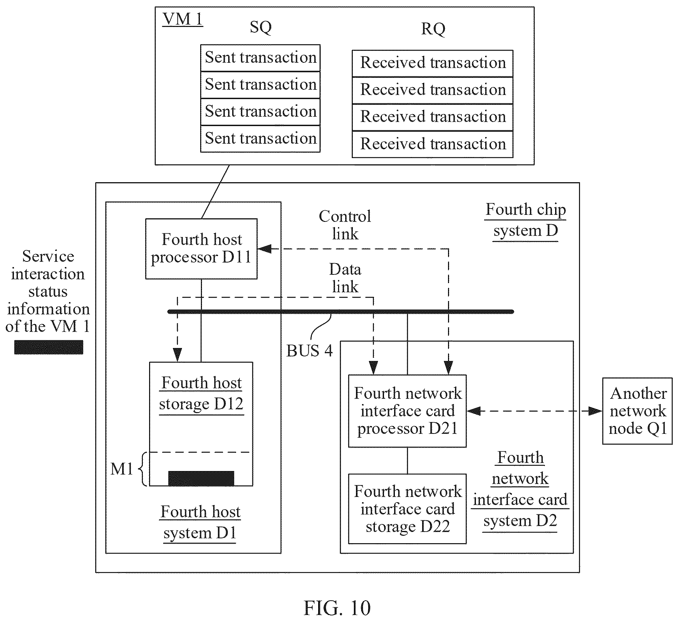

To reduce difficulty in live migration of the VM 1 while avoiding data security and system reliability problems caused by the VM 1 in virtualization passthrough, an embodiment of this application further provides a second electronic device. The second electronic device includes a chassis and a fourth chip system. The fourth chip system may be completely or partially disposed in the chassis. As shown in FIG. 10, the fourth chip system D includes a fourth host system D1 and a fourth network interface card system D2. The fourth host system D1 includes a fourth host processor D11 and a fourth host storage D12. The fourth network interface card system D2 includes a fourth network interface card processor D21 and an interface. The fourth network interface card processor D21 is coupled to the fourth host processor D11 and the fourth host storage D12 respectively through the interface and a fourth bus BUS 4. Interactive communication in the fourth chip system D is implemented through the fourth bus BUS 4. A first virtual machine VM 1 and a virtual machine management system VMM 1 run on the fourth host processor D11. The fourth host processor D11 is configured to apply to the fourth host storage D12 for a first physical area address M1 in physical pages, where the first physical area address is used to store first entry data, and the first physical area address M1 has a non-writable attribute for the first virtual machine VM 1. The first entry data includes service interaction status information of the first virtual machine VM 1. The first virtual machine VM 1 cannot write data into the first physical area address M1. First indication information is sent to the fourth network interface card system D2 through the virtual machine management system VMM 1. The first indication information indicates an identifier of the first virtual machine VM 1 and the first physical area address. The fourth network interface card processor D21 is configured to: input the first indication information through the interface; and store the first indication information.

In some examples, the first indication information may include a virtual address for running in the fourth host system D1, and the virtual address indicates the first physical area address. For example, the first indication information is a GVA, a GPA, or an HVA that has a mapping relationship with the first physical area address. In this embodiment of this application, the first virtual machine VM 1 runs based on the GVA and the GPA. The virtual machine management system VMM 1 on the fourth host processor D11 runs based on the HVA. There is a set mapping relationship between the GVA, the GPA, or the HVA, and an HGA. During actual application, when the mapping relationship is determined, a mapping relationship between the HPA and three types of addresses: the GVA, the GPA, and the HVA may be obtained in different types of mapping query manners. Therefore, the first indication information may include at least one of the GVA, the GPA, and the HVA based on an application scenario and the like. The first physical area address is indicated based on the mapping relationship between these virtual addresses and the first physical area address.

In some examples, the first indication information may include the first physical area address. The first physical area address is an HPA corresponding to the fourth host storage D12. The fourth network interface card processor D21 may directly access the fourth host storage D12 based on the HPA in the first indication information.

For example, the interface that is in the fourth network interface card system D2 and that is configured to receive a first indication signal may be a PF interface.

For example, the virtual machine management system VMM 1 may be a virtual machine manager (virtual machine manager, VMM) or a hypervisor. In many application scenarios, the VMM and the hypervisor are generally considered as equivalent. However, during actual application, the VMM is a software program that manages a virtualized processor, memory, I/O device, interrupt, and instruction set in a virtualization environment. The hypervisor is an OS with a VMM. In this embodiment of this application, functions of the VMM and the hypervisor may be considered as equivalent.

For example, the service interaction status information may include at least one of memory management entry information, service interaction control status information, host processor interaction status information, and network interface card system interaction status information.

For example, the identifier of the first virtual machine VM 1 may be information that may indicate the first virtual machine VM 1, such as a MAC address of a VF interface corresponding to the first virtual machine VM 1, queue nodes of an SQ and an RQ of the first virtual machine VM 1, and a virtual machine label of the first virtual machine VM 1.

In the embodiment of this application shown in FIG. 10, the fourth host processor D11 applies to the fourth host storage D12 for a memory area (that is, the first physical area address M1), where the memory area may be a user-mode memory area, or may be a kernel-mode user area. The service interaction status information of the first virtual machine VM 1 is stored by using the first physical area address M1. The first virtual machine VM 1 cannot write data into the first physical area address M1, and therefore, running of the first virtual machine VM 1 does not affect data security and system reliability. In addition, the fourth host processor D11 in the fourth host system D1 sends, through the virtual machine management system VMM 1, the first indication information to the fourth network interface card processor D21 through the fourth bus BUS 4 and the PF interface. The first indication information indicates the identifier of the first virtual machine VM 1 and the first physical area address to the fourth network interface card processor D21. In subsequent stateful service interaction of the first virtual machine VM 1, the fourth network interface card system D2 receives, based on a receiving transaction in the RQ of the first virtual machine VM 1, a packet message sent by another network node Q1 to the first virtual machine VM 1, parses the packet message to obtain related indication information, and performs corresponding processing based on the indication information.

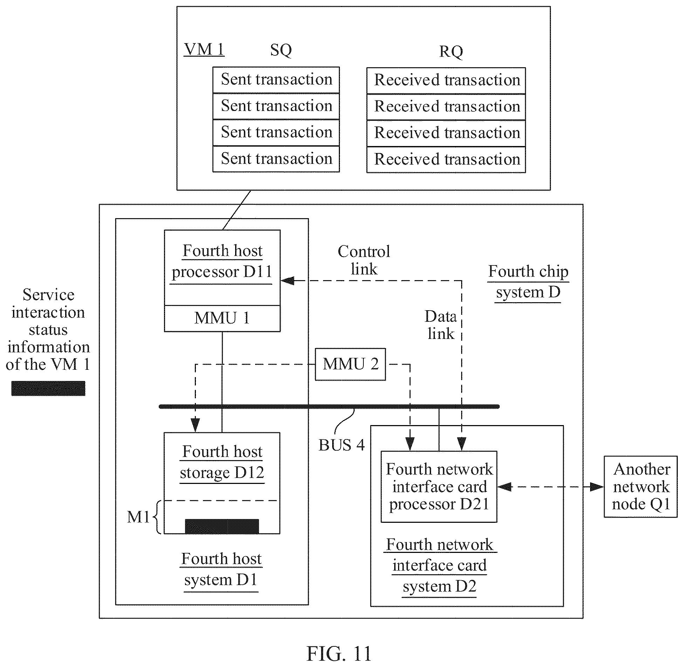

In some possible implementations, as shown in FIG. 11, the fourth host processor D11 further includes a first memory manager MMU 1. The fourth host processor D11 is further configured to: perform translation between a virtual address and a physical address based on a first memory mapping table through the first memory manager MMU 1. In this embodiment of this application, in the fourth host processor D11, a virtual address (for example, a GVA, a GPA, and an HVA) for running in the fourth host processor D11 may be translated into a physical address (for example, an HGA) of the fourth host storage D12 through the first memory manager MMU 1. The first memory mapping table is a mapping entry obtained based on an address mapping relationship determined during design. The first memory mapping table may be stored in the fourth host storage D12, or may be completely or partially stored in a related register or cache of the first memory manager MMU 1. During actual application, the first memory mapping table generally stores a mapping relationship between the HVA and the HPA.

In some possible implementations, as shown in FIG. 11, the fourth chip system further includes a second memory manager MMU 2. The second memory manager MMU 2 is configured to perform translation between a virtual address and a physical address based on a second memory mapping table. The fourth network interface card processor D21 in the fourth network interface card system D2 is coupled to the fourth host storage D12 through the second memory manager MMU 2. In some examples, the second memory manager MMU 2 may be disposed in the fourth host system D1. In some examples, the second memory manager MMU 2 may be disposed in the fourth network interface card system D2. For example, when the first indication information includes the GVA, the GPA, or the HVA that has the mapping relationship with the first physical area address, if the fourth network interface card system D2 needs to access the fourth host storage D12, translation between the virtual address and the physical address also needs to be performed. This translation may be implemented through the second memory manager MMU 2. For example, the second memory manager MMU 2 may be an input/output memory management unit (input/output memory management unit, I/O MMU).

For example, the fourth network interface card system D2 may be a network interface card chip, may be a data processor (Data Processing Unit, DPU) having a network offloading function and a data processing offloading function, may be a system on chip (system on chip, SoC) having a network interface card function, or may be a very large scale integration circuit (very large scale integration circuit, VLSI) having a network interface card function.

For example, the fourth host system D1 and the fourth network interface card system D2 may be installed on a same circuit board, or may be separately installed on different circuit boards. For example, the fourth host system D1 may be installed on a circuit board, and the fourth network interface card system D2 is pluggably installed on the circuit board of the fourth host system D1 in a hot swap manner.

In some possible implementations, the second electronic device may be a network server device configured with the Ethernet-based RDMA (RDMA over converged Ethernet, RoCE) protocol, a network server device configured with the TCP offload engine (TCP offload engine, TOE) protocol, or a network server device configured with the unified bus (unified bus, UB) protocol. For example, the second electronic device further includes a chassis. A circuit board is disposed in the chassis. In some examples, both the fourth host system D1 and the fourth network interface card system D2 are installed on a same circuit board in a chassis. In some examples, both the fourth host system D1 and the fourth network interface card system D2 are installed on different circuit boards in a chassis. In some examples, both the fourth host system D1 and the fourth network interface card system D2 are installed in a chassis, and the fourth network interface card system D2 is pluggably installed on a circuit board of the fourth host system D1 in a hot swap manner. In some examples, the fourth host system D1 is installed in a chassis. The fourth network interface card system D2 is pluggably installed on a hot swap interface outside the chassis of the second electronic device in a hot swap manner, and is coupled to the fourth host system D1 through the hot swap interface of the second electronic device.

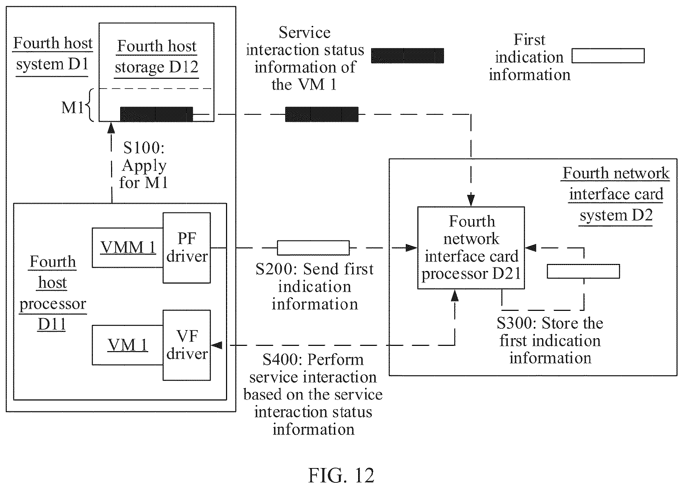

The second electronic device and/or the fourth chip system including structures shown in FIG. 10 and FIG. 11 may be configured to perform the following control method including step S100 to step S400 shown in FIG. 12.

S100: The fourth host processor D11 applies to the fourth host storage D12 for a first physical area address M1.

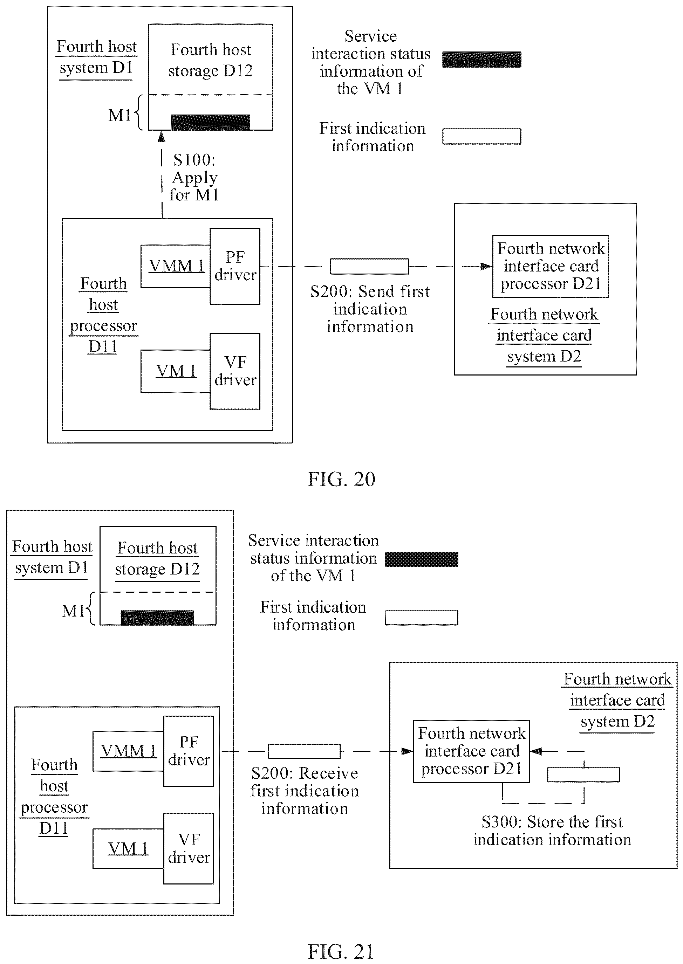

In some possible implementations, as shown in FIG. 12 and FIG. 20, before the first virtual machine VM 1 starts to run and performs service interaction with another network node Q1, the fourth host processor D11 needs to first apply for a first physical area address M in physical pages. The first physical area address M is used to store first entry data, and the first physical area address M has a non-writable attribute for the first virtual machine VM 1. The first entry data includes service interaction status information of the first virtual machine. In this embodiment of this application, because a storage resource of the fourth host storage D12 is limited, to improve processing performance of the fourth host processor D11, when running, the fourth host processor D11 stores memory data that is not used in a process in a hard disk by using a paging mechanism, and when the process needs to be run for use, the memory data in the hard disk is moved back to the fourth host storage D12. Therefore, during running of the fourth host storage D12, a mapping relationship between an HVA and an HPA or a mapping relationship between a GVA and a GPA in different processes changes. To ensure that the fourth network interface card system D2 can accurately obtain related service interaction status data from the fourth host storage D12, the fourth host processor D11 needs to perform memory registration (memory registration, MR). A mapping relationship between the first physical area address M and a virtual address is locked through memory registration, to ensure that the fourth network interface card system D2 can normally access the first physical area address M. The service interaction status information is stored in the fourth host storage D12 of the fourth host system D1, and does not occupy memory space of the fourth network interface card system D2. In addition, compared with a solution in which the service interaction status information is stored in the fourth host system D1, in this embodiment of this application, during live migration, no additional software program is required to control a service interaction status for live migration. This reduces difficulty in live migration of the first virtual machine VM 1.

In this embodiment of this application, running of the fourth host processor D11 is based on a virtual address in virtual pages, and the virtual page corresponds to a physical page (page size) in the fourth host storage D12. Therefore, the first physical area address that is required by the first virtual machine VM 1 and that is used to store the service interaction status information needs storage space in physical pages. Because a chip provides an address service in physical pages, when a physical page is partially occupied, the complete physical page is still obtained when an address of an occupied part of the physical page is invoked. In this case, an invoker may modify all content on the physical page. To ensure security and reliability of the first physical area address for storing the service interaction status information, the first physical area address needs to exclusively occupy one or more physical pages.

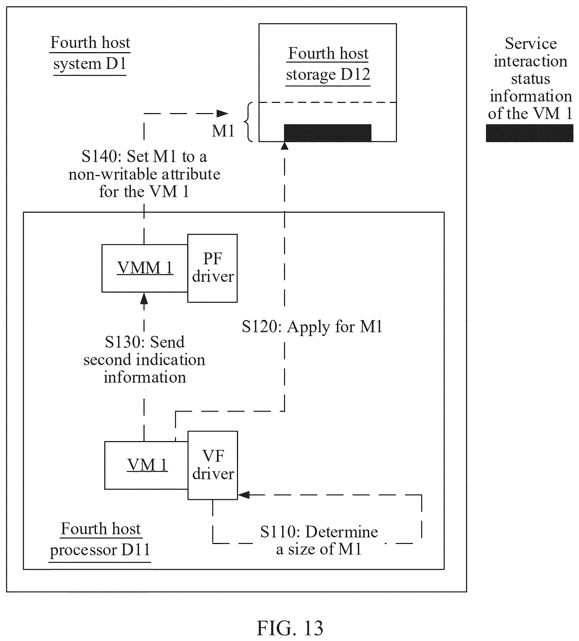

In some possible implementations, the first physical area address M1 may be applied for from the fourth host storage D12 in physical pages through the first virtual machine VM 1. For example, as shown in FIG. 13, step S100 includes operations shown in step S110 to step S140.

S110: Determine a size of the first physical area address M1.

For example, when a VF driver on the first virtual machine VM 1 is loaded, the size of the first physical area address M1 is determined based on a size of memory space required for service interaction of the first virtual machine VM 1.

S120: The VF driver applies to the fourth host storage D12 for the corresponding first physical area address M1.

For example, the VF driver generates second indication information based on the determined size of the first physical area address M1, and applies to the fourth host storage D12 for the corresponding first physical area address M1 based on the second indication information.

S130: The first virtual machine VM 1 sends the second indication information to the virtual machine management system VMM 1. The second indication information indicates the first physical area address M1.

For example, as shown in FIG. 10 and FIG. 11, the first virtual machine VM 1 may send the second indication information to the virtual machine management system VMM 1 through a communication channel between the VF driver of the first virtual machine VM 1 and a PF driver of the virtual machine management system VMM 1. For example, the communication channel may be a mailbox channel. For example, the first virtual machine VM 1 may send the second indication information to the virtual machine management system VMM 1 through a communication channel between the first virtual machine VM 1 and the virtual machine management system VMM 1. For example, the communication channel may be a memory sharing communication channel between the first virtual machine VM 1 and the virtual machine management system VMM 1.

S140: The virtual machine management system VMM 1 sets the first physical area address M1 to the non-writable attribute for the first virtual machine VM 1.

In some examples, the first physical area address M1 may be set to a read-only attribute for the first virtual machine VM 1. In this case, the first physical area address M1 is non-writable for the first virtual machine VM 1. In some examples, the first physical area address M1 may be set to an invisible state for the first virtual machine VM 1. In this case, the first physical area address M1 is neither writable nor readable for the first virtual machine VM 1.

For example, as shown in FIG. 11, the fourth host processor D11 performs translation between a virtual address and a physical address based on a first memory mapping table through the first memory manager MMU 1. The virtual machine management system VMM 1 configures a first page table entry in a location that is in the first memory mapping table and that corresponds to the first virtual machine VM 1, where the first page table entry indicates a mapping relationship between the first physical area address M1 and the virtual address; and sets an attribute of the first page table entry to a read-only attribute for the first virtual machine VM 1. In this embodiment of this application, after the first physical area address M1 is applied for through the first virtual machine VM 1, the first physical area address M1 is registered in an available memory of the first virtual machine VM 1. In this case, the first virtual machine VM 1 has read/write permission on the first physical area address M1. To avoid security and reliability problems caused by performing, by the first virtual machine VM 1, data write operation on the first physical area address M1, the virtual machine management system VMM 1 sets the attribute of the first page table entry to a read-only attribute for the first virtual machine VM 1, so that the first virtual machine VM 1 cannot modify the first physical area address M1.

For example, as shown in FIG. 11, the second memory manager MMU 2 performs translation between a virtual address and a physical address based on a second memory mapping table. The fourth network interface card system D2 may perform memory access to the fourth host storage D12 through the second memory manager MMU 2. The virtual machine management system VMM 1 may further store related content of the first page table entry in the second memory mapping table, so that the fourth network interface card system D2 may have read/write permission on the first physical area address M1.

For example, the first page table entry in the second memory mapping table may be set to a non-writable state for the first virtual machine VM 1. For related descriptions of setting the first page table entry in the second memory mapping table corresponding to the MMU 2 to the non-writable state for the first virtual machine VM 1, refer to related descriptions of setting the first page table entry in the first memory mapping table corresponding to the MMU 1 to the non-writable state for the first virtual machine VM 1. Details are not described herein again.

In the embodiment of this application shown in FIG. 13, the first physical area address M1 is applied for through the first virtual machine VM 1. The first physical area address M1 occupies memory space of the first virtual machine VM 1. In this implementation, the first physical area address required by the service interaction status information does not occupy the memory space of the fourth network interface card system D2, but occupies the memory space of the first virtual machine VM 1, to facilitate memory resource management and the like on the first virtual machine VM 1. In addition, the service interaction status information is stored in the fourth host storage D12, which facilitates live migration of the first virtual machine VM 1.

In some possible implementations, the first physical area address M1 may be applied for from the fourth host storage D12 in physical pages through the virtual machine management system VMM 1.

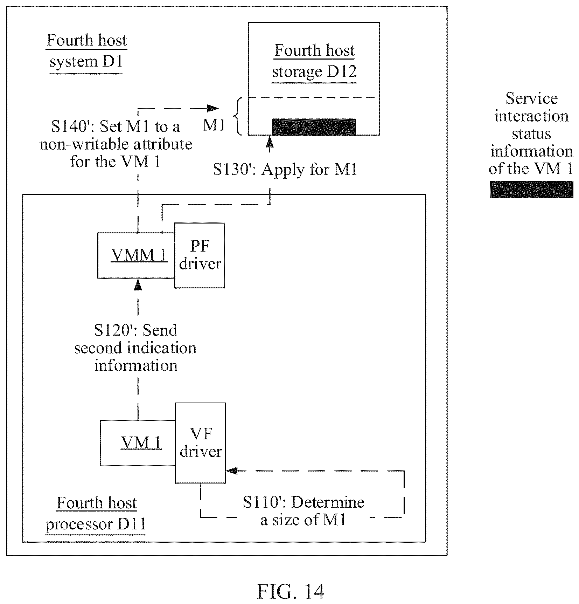

In some examples, when the first physical area address M1 is applied for through the virtual machine management system VMM 1, the first physical area address M1 may be registered in the memory space of the first virtual machine VM 1. For example, as shown in FIG. 14, step S100 may include operations shown in step S110' to step S140'.

S110': Determine a size of the first physical area address M1.

For related descriptions of step S110', refer to content of step S110 in the foregoing embodiments. Details are not described herein again.

S120': The first virtual machine VM 1 sends second indication information to the virtual machine management system VMM 1.

For example, a VF driver generates the second indication information based on the determined size of the first physical area address M1. The first virtual machine VM 1 may send the second indication information to the virtual machine management system VMM 1 through a communication channel between the VF driver of the first virtual machine VM 1 and a PF driver of the virtual machine management system VMM 1. For example, the communication channel may be a mailbox channel.

For example, the first virtual machine VM 1 may send the second indication information to the virtual machine management system VMM 1 through a communication channel between the first virtual machine VM 1 and the virtual machine management system VMM 1. For example, the communication channel may be a memory sharing communication channel between the first virtual machine VM 1 and the virtual machine management system VMM 1.

S130': The virtual machine management system VMM 1 applies to the fourth host storage D12 for the first physical area address M1 in physical pages based on the second indication information.

S140': The virtual machine management system VMM 1 sets the first physical area address M1 to the non-writable attribute for the first virtual machine VM 1.

For example, as shown in FIG. 11, when the first physical area address M1 is applied for through the virtual machine management system VMM 1, the virtual machine management system VMM 1 may configure a first page table entry in a location that is in a first memory mapping table and that corresponds to the first virtual machine VM 1. To prevent the first virtual machine VM 1 from directly modifying the first physical area address M1, in some examples, as shown in FIG. 11, the virtual machine management system VMM 1 may set an attribute of the first page table entry to a read-only attribute and a non-writable attribute for the first virtual machine VM 1. In this embodiment of this application, the attribute of the first page table entry is set to the non-writable attribute for the first virtual machine VM 1, to prevent security and reliability problems caused by modification of service interaction status data of the first physical area address M1 by running of the first virtual machine VM 1. In some examples, the virtual machine management system VMM 1 may set the attribute of the first page table entry to a non-readable attribute and a non-writable attribute for the first virtual machine VM 1. In this embodiment of this application, the attribute of the first page table entry is set to the non-readable attribute and the non-writable attribute for the first virtual machine VM 1. In this case, the first physical area address M1 is completely invisible to the first virtual machine VM 1. This can more securely prevent the security and reliability problems caused by the modification of the service interaction status data of the first physical area address M1 by running of the first virtual machine VM 1.

For example, as shown in FIG. 11, when the first indication information includes a GVA, a GPA, or an HVA that is mapped to the first physical area address, the virtual machine management system VMM 1 further stores related content of the first page table entry in a second memory mapping table, so that the fourth network interface card system D2 may have read/write permission on the first physical area address M1. For related descriptions of the first page table entry in the embodiment in this application shown in FIG. 14, refer to the descriptions of the first page table entry in the embodiment shown in FIG. 13. Details are not described herein again.

In the embodiment of this application shown in FIG. 14, the first physical area address M1 is applied for through the first virtual machine VM 1. The first physical area address M1 occupies memory space of the first virtual machine VM 1. In this implementation, the first physical area address required by the service interaction status information does not occupy the memory space of the fourth network interface card system D2, but occupies the memory space of the first virtual machine VM 1, to facilitate memory resource management and the like on the first virtual machine VM 1. In addition, the service interaction status information is stored in the fourth host storage D12, which facilitates live migration of the first virtual machine VM 1.

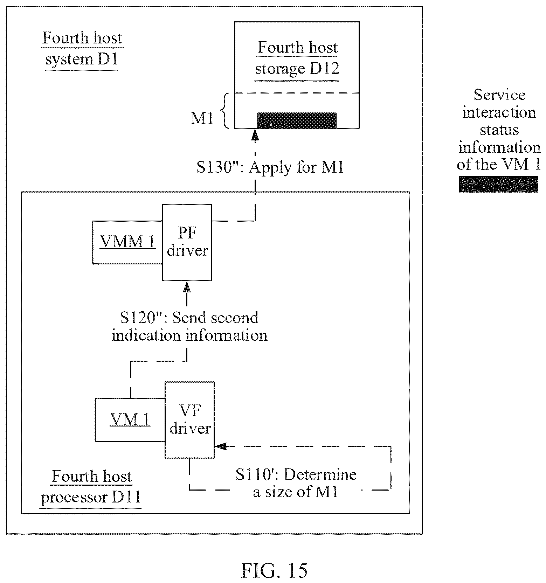

In some examples, when the first physical area address M1 is applied for through the virtual machine management system VMM 1, the first physical area address M1 may be registered in the memory space of the virtual machine management system VMM 1. For example, as shown in FIG. 15, step S110 may include operations shown in step S110" to step S130".

S110": Determine a size of the first physical area address M1.

For related descriptions of step S110", refer to content of step S110 in the foregoing embodiment. Details are not described herein again.

S120": The first virtual machine VM 1 sends second indication information to a PF driver of the virtual machine management system VMM 1.

For example, the first virtual machine VM 1 may send the second indication information to the virtual machine management system VMM 1 through a communication channel between a VF driver of the first virtual machine VM 1 and the PF driver of the virtual machine management system VMM 1. For example, the communication channel may be a VF mailbox (mailbox) channel.

For example, the first virtual machine VM 1 may send the second indication information to the virtual machine management system VMM 1 through a communication channel between the first virtual machine VM 1 and the virtual machine management system VMM 1. For example, the communication channel may be a memory sharing communication channel between the first virtual machine VM 1 and the virtual machine management system VMM 1.

S130": Apply to the fourth host storage D12 for the first physical area address M1 through the PF driver of the virtual machine management system VMM 1.

For example, the PF driver performs an initialization operation after completion of applying for the first physical area address M1.

In this embodiment of this application, the first physical area address M1 applied for through the PF driver is a memory address to which the virtual machine management system VMM 1 belongs. In other words, in this case, a first page table entry related to the first physical area address M1 is registered in space to which the virtual machine management system VMM 1 belongs.

For example, when the first indication information includes a GVA, a GPA, or an HVA that is mapped to the first physical area address, the virtual machine management system VMM 1 stores related content of the first page table entry in a second memory mapping table, so that the fourth network interface card system D2 may have read/write permission on the first physical area address M1.

In some possible implementations, the virtual machine management system VMM 1 changes a second page table entry to a third page table entry, where the second page table entry is a page table entry that is in the first memory mapping table and that corresponds to the first virtual machine VM 1, and the third page table entry is a page table entry that is in the first memory mapping table and that corresponds to the virtual machine management system VMM 1. In this embodiment of this application, because the first page table entry corresponding to the first physical area address M1 is registered in the memory to which the virtual machine management system VMM 1 belongs, the first physical area address M1 occupies a memory resource of the virtual machine management system VMM 1. This part of memory resource is used by a user of the first virtual machine VM 1. Therefore, to facilitate management of memory resources, a part of a memory resource (that is, the second page table entry) of the first virtual machine VM 1 may be changed to a memory resource (that is, the third page table entry) of the virtual machine management system VMM 1, to implement precise management of memory resources used by the user of the first virtual machine VM 1. For example, a physical area address related to the second page table entry may be applied for through the first virtual machine VM 1, and the virtual machine management system VMM 1 does not actually allocate this part of physical area address to the first virtual machine VM 1, but registers the part of physical area address in a form of the third page table entry in the memory to which the virtual machine management system VMM 1 belongs. For example, memory space corresponding to the second page table entry may alternatively be deducted when the first virtual machine VM 1 is initialized. In this embodiment of this application, an operation of obtaining, from the first virtual machine VM 1, the memory space corresponding to the second page table entry to compensate for the memory resource of the virtual machine management system VMM 1 is not limited to an operation sequence of the control methods recorded in this embodiment of this application. During actual application, the operation may be performed at any runnable time.

S200: The fourth host processor D11 sends a first indication signal to the fourth network interface card processor D21, and the fourth network interface card processor D21 receives the first indication signal.

In some possible implementations, as shown in FIG. 12 and FIG. 20, the fourth host processor D11 sends the first indication information to the fourth network interface card system D2 through the virtual machine management system VMM 1. The first indication information indicates an identifier of the first virtual machine VM 1 and the first physical area address M1. In some possible implementations, as shown in FIG. 12 and FIG. 21, the fourth network interface card processor D21 receives the first indication signal. For example, the fourth network interface card processor D21 may receive the first indication signal through a PF interface. In this embodiment of this application, after the fourth network interface card processor D21 stores the first indication information, when assisting, through the VF interface corresponding to the first virtual machine VM 1, the first virtual machine VM 1 in performing service interaction, the fourth network interface card processor D21 needs to obtain the service interaction status information from the first physical area address M, to assist the first virtual machine VM 1 in performing service interaction. Therefore, the fourth host processor D11 of the fourth host system D1 needs to send the first indication signal to the fourth network interface card processor D21 of the fourth network interface card system D2, to indicate the identifier of the first virtual machine VM 1 and the first physical area address.

S300: The fourth network interface card processor D21 stores the first indication information.

For example, as shown in FIG. 12 and FIG. 21, the fourth network interface card processor D21 of the fourth host system D1 stores the first indication information after receiving the first indication information. In some examples, the fourth network interface card processor D21 may store the first indication information in a related register, cache, or storage in the fourth host system D1. When the fourth network interface card processor D21 subsequently assists the first virtual machine VM 1 in performing service interaction, the fourth network interface card processor D21 may access the first physical area address M1 in the fourth host system D1 by using the stored first indication information, to obtain the related service interaction status information; and assist service interaction of the first virtual machine VM 1 based on the service interaction status information.

S400: The fourth network interface card system D2 performs service interaction with the first virtual machine VM 1 based on the service interaction status information.

In some possible implementations, as shown in FIG. 10 and FIG. 11, the first virtual machine VM 1 in the fourth host system D1 performs service interaction with another network node Q1 through the fourth network interface card processor D21. In a stateful service interaction process, the fourth network interface card processor D21 obtains a first packet sent by the another network node Q1 to the first virtual machine VM 1. The first packet carries interaction indication information. The interaction indication information may be control indication information of a control link, or may be data processing indication information of a data link. The fourth network interface card processor D21 performs packet parsing on the obtained packet, to obtain the interaction indication information. In this case, the interaction indication information is interaction indication information that cannot be processed by the fourth network interface card processor D21. The fourth network interface card processor D21 further needs to obtain the service interaction status information from the first physical area address M1 based on the first indication information, and determine, based on the service interaction status information, a service that needs to be actually executed based on the interaction indication information. For example, when the interaction indication information is the control indication information, a service that needs to be executed may be feedback of handshake control information or setting of an interaction node connection. For example, when the interaction indication information is the data processing indication information, a service that needs to be executed may be performing a DMA write operation and/or a DMA read operation on the fourth host storage D12.

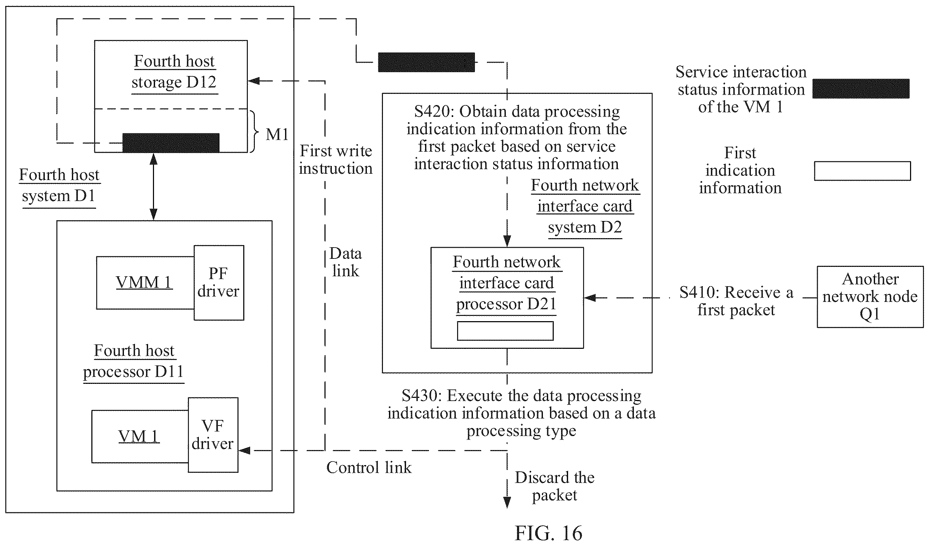

In some possible implementations, when the interaction indication information is the data processing indication information, a data processing operation included in the data processing indication information may be data processing performed on the first physical area address M1. In this case, when executing a data-related DMA operation based on the data processing indication information, the fourth network interface card processor D21 may modify related data in the first physical area address M1, thereby causing security and reliability problems. To resolve this problem, as shown in FIG. 16, step S400 may further include the following operations of step S410 to step S430.

S410: Receive the first packet. The first packet carries data processing indication information, and the data processing indication information indicates a data processing type and a second physical area address.

For example, the another network node Q1 sends the first packet to the fourth network interface card processor D21, and performs service interaction with the first virtual machine VM 1 by using the first packet. For example, the another network node Q1 indicates, by using the first packet, the fourth network interface card processor D21 to perform a DMA operation on the second physical area address based on the corresponding data processing type.

S420: Obtain the data processing indication information from the first packet based on the service interaction status information.

For example, the fourth network interface card processor D21 performs packet parsing on the first packet, obtains the service interaction status information from the first physical area address M1 based on the first indication information, and obtains the data processing type and the second physical area address of the data processing indication information based on the service interaction status information.

For example, as shown in FIG. 11, the fourth network interface card processor D21 accesses the first physical area address M1 in the fourth host storage D12 based on the stored first indication information through the second memory manager MMU 2, to obtain the related service interaction status information.

S430: Execute the data processing indication information based on the data processing type.

In some examples, when the data processing type is a data write operation and the second physical area address partially or completely belongs to the first physical area address, the fourth network interface card processor D21 discards the first packet. In some examples, if the data processing type is a data write operation, and the second physical area address does not belong to the first physical area address, the fourth network interface card processor D21 sends a first write instruction to the fourth host storage D12, where the first write instruction instructs to write data into the second physical area address in the fourth host storage D12 of the fourth host system D1, or modify data in the second physical area address. In this embodiment of this application, when the first packet carries the data processing indication information, the data processing type and a data area virtual address of the data processing indication information may be confirmed. When the data processing type is a DMA read operation, the first packet does not modify data in the first physical area address M1, and the DMA read operation may be directly executed. When the data processing type is a DMA write operation, the first packet may modify data in the first physical area address M1. In this case, a relationship between the second physical area address and the first physical area address M1 needs to be determined. When the second physical area address does not belong to the first physical area address M1, the DMA write operation does not cause modification to the data in the first physical area address M1, and the first packet may be executed. However, when the second physical area address partially or completely belongs to the first physical area address M1, the DMA write operation may cause modification to the data in the first physical area address M1. In this case, the fourth network interface card processor D21 discards the first packet, and does not execute a corresponding DMA service.

For example, the first physical area address M1 may be a continuous address, or may be a plurality of discontinuous address segments. For example, in the embodiment in FIG. 13, the first physical area address M1 applied for through the first virtual machine VM 1 may be a plurality of discontinuous address segments. The first physical area address M1 applied for through the virtual machine management system VMM 1 in FIG. 14 and FIG. 15 may be a continuous address. During determining of an area between the second physical area address and the first physical area address M1, if the first physical area address M1 is a discontinuous address, in some examples, a belonging relationship between a plurality of segments of discontinuous addresses and the second physical area address may be determined separately. In some examples, a plurality of segments of discontinuous addresses may be split into memory pages that have a fixed length and whose start addresses are aligned. A hash (hash) address table is generated based on the split memory pages. The subordinate relationship between the second physical area address and the first physical area address M1 is determined by querying the hash address table.

In some examples, after discarding the first packet, the fourth network interface card processor D21 may send a feedback packet to a peer network node that initiates the first packet, and notify, by using the feedback packet, the peer network node that the first packet is not executed.

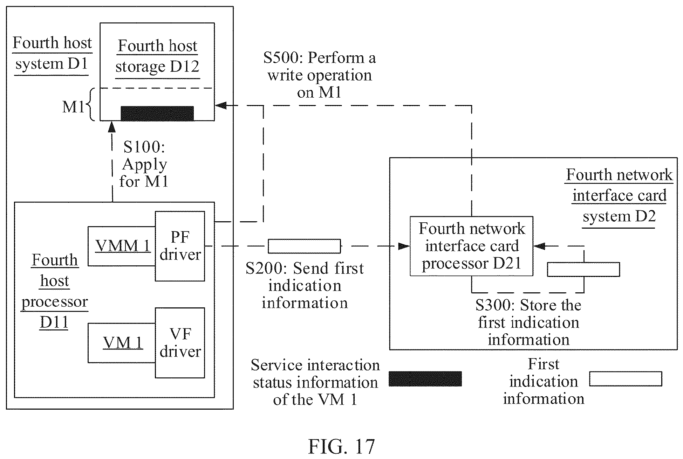

In some possible implementations, in time after step S300 is performed, as shown in FIG. 17, the control method further includes step S500.

S500: Perform a write operation on the first physical area address M1.

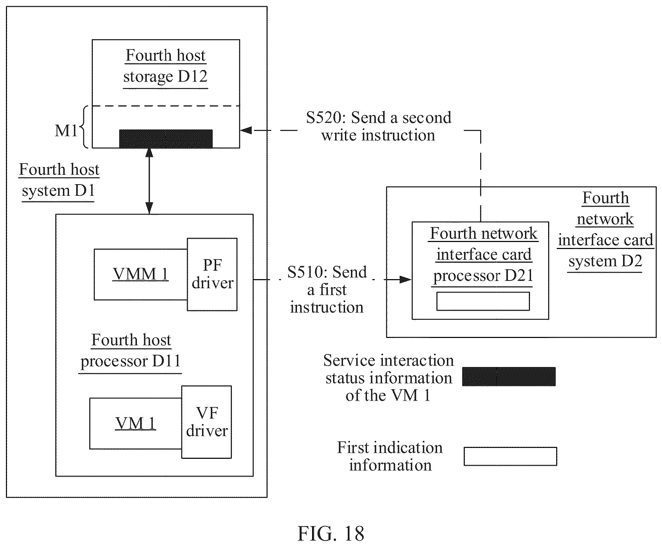

In some examples, the DMA write operation may be performed on the first physical area address M1 by using the fourth network interface card system D2. As shown in FIG. 18, in this case, step S500 may include operations of the following step S510 and step S520.

S510: The fourth host system D1 sends a first instruction to the fourth network interface card system D2. The first instruction instructs to perform the write operation on the first physical area address M1.

For example, the first instruction may be sent to the fourth network interface card system D2 through the first virtual machine VM 1 and/or the virtual machine management system VMM 1. In this embodiment of this application, when the DMA write operation needs to be performed on the first physical area address M1, the first instruction may be sent to the fourth network interface card system D2 through the first virtual machine VM 1 and/or the virtual machine management system VMM 1. The first instruction includes data modification information and the first physical area address M1. The fourth network interface card system D2 is indicated, by using the data modification information and the first physical area address M1, to perform the DMA write operation on the first physical area address M1.

S520: The fourth network interface card system D2 sends a second write instruction to the fourth host storage D12 based on the first instruction.

For example, after receiving the first instruction, the fourth network interface card processor D21 of the fourth network interface card system D2 obtains the data modification information and the first physical area address M1 in the first instruction, and generates the second write instruction based on the data modification information and the first physical area address M1. The fourth network interface card system D2 sends the second write instruction to the fourth host storage D12 in the fourth host system D1. The second write instruction instructs the fourth host storage D12 to write data into the first physical area address M1, or modify service interaction status information in the first physical area address M1.

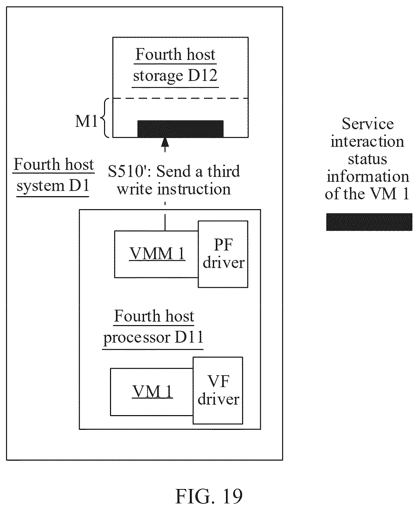

In some examples, the write operation may be performed on the first physical area address M1 by using the fourth host system D1. As shown in FIG. 19, in this case, step S500 may include an operation of the following step S510'.

S510': Send a third write instruction to the fourth host storage D12 through the virtual machine management system VMM 1, where the third write instruction instructs the fourth host storage D12 to write data into the first physical area address M1, or modify service interaction status information in the first physical area address M1.

For example, when the first virtual machine VM 1 needs to perform a write operation on the first physical area address M1, the first virtual machine VM 1 may send the third write instruction to the fourth host storage D12 through the virtual machine management system VMM 1, or may send the third write instruction to the fourth host storage D12 through a PF driver of the virtual machine management system VMM 1.

Embodiments of this application provide a network interface card system, a host system, a control method, and a chip system. The chip system includes the foregoing network interface card system and host system. The host system includes a host processor and a host storage. A first virtual machine and a virtual machine management system run on the host processor. The host storage stores running data of the first virtual machine. The network interface card system may be directly connected to the first virtual machine, to assist the first virtual machine in performing stateful service interaction with another network node Q1. The stateful service interaction needs to be based on service interaction status information. In this embodiment of this application, a first physical area address is applied for through the host processor. The first physical area address is a memory address in the host storage, and the first physical area address is used to store the service interaction status information of the first virtual machine. Compared with storing the service interaction status information in the network interface card system, storing the service interaction status information in the host storage can reduce difficulty of performing live migration on the first virtual machine. In addition, when the first virtual machine does not have write permission on the first physical area address, security and reliability problems caused by running of the first virtual machine when the first virtual machine is directly connected to the network interface card system can be avoided.

An embodiment of this application further provides a computer-readable storage medium. The computer-readable storage medium includes instructions. When the instructions are run on a processor, the processor is caused to perform the control method recorded in the foregoing embodiments (for example, perform the control method recorded in the embodiments in FIG. 12, FIG. 13, FIG. 14, FIG. 15, FIG. 16, FIG. 17, FIG. 18, FIG. 19, FIG. 20, and FIG. 21).

An embodiment of this application further provides a computer program product. When the computer program product runs on the chip system (for example, the fourth chip system recorded in FIG. 10 and FIG. 11) recorded in the foregoing embodiments, the chip system is caused to perform the control method recorded in the foregoing embodiments (for example, perform the control method recorded in the embodiments in FIG. 12, FIG. 13, FIG. 14, FIG. 15, FIG. 16, FIG. 17, FIG. 18, FIG. 19, FIG. 20, and FIG. 21). When the computer program product runs on a computer, the computer is caused to perform the control method recorded in the foregoing embodiments (for example, perform the control method recorded in the embodiments in FIG. 12, FIG. 13, FIG. 14, FIG. 15, FIG. 16, FIG. 17, FIG. 18, FIG. 19, FIG. 20, and FIG. 21).

The processor in embodiments of this application may be a chip. For example, the processor may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a micro controller unit (micro controller unit, MCU), a programmable controller (programmable logic device, PLD), or another integrated chip.

The storage in embodiments of this application may be a volatile memory, or may include a volatile memory and a non-volatile memory. The volatile memory may be a random access memory (random access memory, RAM), and is used as an external cache. Through example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the storage of the systems and methods described in this specification includes but is not limited to these and any storage of another proper type.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, modules and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and module, refer to a corresponding process in the foregoing method embodiments. Details are not described herein again.

In the several embodiments provided in this application, it should be understood that, the disclosed system, device, and method may be implemented in other manners. For example, the described device embodiments are merely examples. For example, division into the modules is merely logical function division and may be other division during actual implementation. For example, a plurality of modules or components may be combined or integrated into another device, or some features may be ignored or not performed. In addition, the displayed or discussed mutual couplings or direct couplings or communication connections may be implemented through some interfaces. The indirect couplings or communication connections between the devices or modules may be implemented in electronic, mechanical, or other forms.

The modules described as separate parts may or may not be physically separate, and parts displayed as modules may or may not be physical modules, may be located in one device, or may be distributed on a plurality of devices. Some or all the modules may be selected based on actual requirements to achieve the objectives of the solutions of embodiments.

In addition, functional modules in embodiments of this application may be integrated into one device, or each of the modules may exist alone physically, or two or more modules are integrated into one device.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, the procedures or the functions in embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A network interface card system control method, wherein the control method comprises:
receiving first indication information, wherein the first indication information indicates an identifier of a first virtual machine and a first physical area address, the first virtual machine runs on a host system, the first physical area address is a storage address in physical pages in a host storage of the host system, the first physical area address is used to store first entry data, the first physical area address has a non-writable attribute for the first virtual machine, and the first entry data comprises service interaction status information of the first virtual machine; and
storing the first indication information.

2. The control method according to claim 1, wherein the control method further comprises:
receiving a first packet, and discarding the first packet, wherein the first packet carries data processing indication information, the data processing indication information indicates a data processing type and a second physical area address, the data processing type corresponding to the first packet is a data write operation, and the second physical area address partially or completely belongs to the first physical area address.

3. The control method according to claim 2, wherein the control method further comprises:
obtaining the service interaction status information from the first physical area address in the host storage based on the first packet and the first indication information; and
obtaining the data processing indication information based on the service interaction status information.

4. The control method according to any one of claims 1 to 3, wherein the control method further comprises:
receiving a first instruction, wherein the first instruction instructs to perform a write operation on the first physical area address; and
sending a second write instruction to the host storage based on the first instruction, wherein the second write instruction instructs the host storage to write data into the first physical area address, or modify the service interaction status information in the first physical area address.

5. A control method, wherein the host system comprises a host processor and a host storage, a first virtual machine and a virtual machine management system run on the host processor, the control method is based on the host processor, and the control method comprises:
applying to the host storage for a first physical area address in physical pages, wherein the first physical area address is used to store first entry data, the first physical area address has a non-writable attribute for the first virtual machine, and the first entry data comprises service interaction status information of the first virtual machine; and
sending first indication information to a network interface card system through the virtual machine management system, wherein the first indication information indicates an identifier of the first virtual machine and the first physical area address.

6. The control method according to claim 5, wherein applying to the host storage for the first physical area address in physical pages comprises:
applying to the host storage for the first physical area address in physical pages through the first virtual machine, and sending second indication information to the virtual machine management system, wherein the second indication information indicates the first physical area address.

7. The control method according to claim 5, wherein applying to the host storage for the first physical area address in physical pages comprises:
sending second indication information to the virtual machine management system through the first virtual machine, wherein the second indication information indicates the first physical area address; and
applying, based on the second indication information, to the host storage for the first physical area address in physical pages through the virtual machine management system.

8. The control method according to claim 6 or 7, wherein the control method further comprises:
performing translation between a virtual address and a physical address based on a first memory mapping table;
configuring, through the virtual machine management system, a first page table entry in a location that is in the first memory mapping table and that corresponds to the first virtual machine, wherein the first page table entry indicates a mapping relationship between the first physical area address and the virtual address; and
setting an attribute of the first page table entry to the non-writable attribute for the first virtual machine.

9. The control method according to claim 7, wherein the control method further comprises:
performing translation between a virtual address and a physical address based on a first memory mapping table; and
configuring, through the virtual machine management system, a first page table entry in a location that is in the first memory mapping table and that corresponds to the virtual machine management system, wherein the first page table entry indicates a mapping relationship between the first physical area address and the virtual address.

10. The control method according to claim 9, wherein the control method further comprises:
changing a second page table entry to a third page table entry through the virtual machine management system, wherein the second page table entry is a page table entry that is in the first memory mapping table and that corresponds to the first virtual machine, and the third page table entry is a page table entry that is in the first memory mapping table and that corresponds to the virtual machine management system.

11. The control method according to any one of claims 5 to 10, wherein the control method further comprises:
sending a third write instruction to the host storage through the virtual machine management system, wherein the third write instruction instructs the host storage to write data into the first physical area address, or modify the service interaction status information in the first physical area address.

12. The control method according to any one of claims 5 to 11, wherein the control method further comprises:
sending a first instruction to the network interface card system through the first virtual machine and/or the virtual machine management system, wherein the first instruction instructs to perform a write operation on the first physical area address.

13. A network interface card system, wherein the network interface card system comprises a network interface card processor and an interface, and the network interface card processor is configured to:
input a first indication signal through the interface, wherein the first indication information indicates an identifier of a first virtual machine and a first physical area address, the first virtual machine runs on a host system, the first physical area address is a storage address in physical pages in a host storage of the host system, the first physical area address is used to store first entry data, the first physical area address has a non-writable attribute for the first virtual machine, and the first entry data comprises service interaction status information of the first virtual machine; and
store the first indication information.

14. The network interface card system according to claim 13, wherein the network interface card system is further configured to:
receive a first packet, and discard the first packet, wherein the first packet carries data processing indication information, the data processing indication information indicates a data processing type and a second physical area address, the data processing type corresponding to the first packet is a data write operation, and the second physical area address partially or completely belongs to the first physical area address.

15. The network interface card system according to claim 14, wherein the network interface card processor is further configured to:
obtain the service interaction status information from the first physical area address in the host storage based on the first packet and the first indication information; and
obtain the data processing indication information based on the service interaction status information.

16. The network interface card system according to any one of claims 13 to 15, wherein the network interface card processor is further configured to:
receive a first instruction, wherein the first instruction instructs to perform a write operation on the first physical area address; and
send a second write instruction to the host storage based on the first instruction, wherein the second write instruction instructs the host storage to write data into the first physical area address, or modify the service interaction status information in the first physical area address.

17. A host system, wherein the host system comprises a host processor and a host storage, a first virtual machine and a virtual machine management system run on the host processor, and the host processor is configured to:
apply to the host storage for a first physical area address in physical pages, wherein the first physical area address is used to store first entry data, the first physical area address has a non-writable attribute for the first virtual machine, and the first entry data comprises service interaction status information of the first virtual machine; and
send first indication information to a network interface card system through the virtual machine management system, wherein the first indication information indicates an identifier of the first virtual machine and the first physical area address.

18. The host system according to claim 17, wherein the host processor is specifically configured to:
apply to the host storage for the first physical area address in physical pages through the first virtual machine, and send second indication information to the virtual machine management system, wherein the second indication information indicates the first physical area address.

19. The host system according to claim 17, wherein the host processor is specifically configured to:
send second indication information to the virtual machine management system through the first virtual machine, wherein the second indication information indicates the first physical area address; and
apply, based on the second indication information, to the host storage for the first physical area address in physical pages through the virtual machine management system.

20. The host system according to claim 17 or 19, wherein the host processor further comprises a first memory manager, and
the host processor is further configured to:
perform translation between a virtual address and a physical address based on a first memory mapping table through the first memory manager;
configure, through the virtual machine management system, a first page table entry in a location that is in the first memory mapping table and that corresponds to the first virtual machine, wherein the first page table entry indicates a mapping relationship between the first physical area address and the virtual address; and
set an attribute of the first page table entry to the non-writable attribute for the first virtual machine.

21. The host system according to claim 19, wherein the host processor further comprises a first memory manager, and
the host processor is further configured to:
perform translation between a virtual address and a physical address based on a first memory mapping table through the first memory manager; and
configure, through the virtual machine management system, a first page table entry in a location that is in the first memory mapping table and that corresponds to the virtual machine management system, wherein the first page table entry indicates a mapping relationship between the first physical area address and the virtual address.

22. The host system according to claim 21, wherein the host processor is further configured to:
change a second page table entry to a third page table entry through the virtual machine management system, wherein the second page table entry is a page table entry that is in the first memory mapping table and that corresponds to the first virtual machine, and the third page table entry is a page table entry that is in the first memory mapping table and that corresponds to the virtual machine management system.

23. The host system according to any one of claims 17 to 22, wherein the host processor is further configured to:
send a third write instruction to the host storage through the virtual machine management system, wherein the third write instruction instructs the host storage to write data into the first physical area address, or modify the service interaction status information in the first physical area address.

24. The host system according to any one of claims 17 to 23, wherein the host processor is further configured to:
send a first instruction to the network interface card system through the first virtual machine and/or the virtual machine management system, wherein the first instruction instructs to perform a write operation on the first physical area address.

25. A chip system, wherein the chip system comprises the network interface card system according to any one of claims 13 to 16 and the host system according to any one of claims 17 to 24.

26. An electronic device, comprising a chassis and the chip system according to claim 25, wherein the chip system is partially or completely disposed in the chassis.

27. A computer-readable storage medium, wherein the computer-readable storage medium comprises instructions, and when the instructions are run on a processor, the processor is caused to perform the control method according to any one of claims 1 to 4, and/or perform the control method according to any one of claims 5 to 12.

28. A computer program product, wherein when the computer program product runs on a computer, the computer is caused to perform the control method according to any one of claims 1 to 4, and/or perform the control method according to any one of claims 5 to 12.
